# FASCICULE DE BREVET EUROPEEN

(11) **EP 1 971 431 B1**
(45) Date de publication et mention de la délivrance du brevet: **13.02.2013**
(21) Numéro de dépôt: 06841949.8
(22) Date de dépôt: 15.12.2006
(51) Int. Cl.: B01J 23/63, B01J 23/38, B01J 35/00, B01J 35/02, C22C 32/00

(54) **PREPARATION D'UN MATERIAU COMPRENANT UN MELANGE DE NANOPARTICULES DE METAL NOBLE ET DE NANOPARTICULES D'OXYDE DE TERRES RARES**
HERSTELLUNG EINES EINE MISCHUNG VON EDELMETALL-NANOPARTIKELN UND SELTENERDMETALLOXID-NANOPARTIKELN ENTHALTENDEN MATERIALS
PRODUCTION OF A MATERIAL COMPRISING A MIXTURE OF NOBLE METAL NANOPARTICLES AND RARE-EARTH OXIDE NANOPARTICLES

(30) Priorité: 16.12.2005 FR 0512833
(43) Date de publication de la demande: 24.09.2008
(73) Titulaire: Centre National de la Recherche Scientifique, 75016 Paris (FR); UNIVERSITE DE SAVOIE, 73000 Chambery (FR)
(72) Inventeur: LOMELLO-TAFIN, Marc-Charles, F-74370 Argonay (FR); ROUSSET, Jean-Luc, F-69006 Lyon (FR); MOREAU, Jean-Michel, F-74000 Annecy (FR); AIT CHAOU, Abdelouahed, F-74940 Annecy Le Vieux (FR); MORFIN, Franck, F-69700 Loire Sur Rhone (FR)
(74) Mandataire: Sueur, Yvette
(86) Numéro de dépôt international: PCT/FR2006/002746
(87) Numéro de publication internationale: WO 2007/080275

(56) Documents cités:
- EP-A- 0 968 763
- EP-A- 1 207 530
- WO-A-2006/006739
- DE-U- 29 917 118
- FR-A- 2 779 666

## Description

La présente invention concerne un procédé de préparation d'un matériau comprenant un mélange de nanoparticules de métal noble et de nanoparticules d'oxydes de terres rares, un matériau composite comprenant un tel mélange, ainsi que diverses utilisations de ce matériau.

De nombreux domaines nécessitent l'utilisation de matériaux comprenant des particules de métaux nobles et des particules d'oxydes de taille nanométrique. Il s'agit par exemple des domaines de la catalyse, de l'optique, du magnétisme ou de la métallurgie des poudres.

En particulier, les métaux nobles tels que l'or ou le palladium sont connus pour leurs propriétés intéressantes en tant que catalyseurs. Leur activité catalytique est particulièrement exacerbée Lorsqu'ils se présentent sous forme de nanoparticules supportées sur un oxyde.

On connaît, par FR 2 779 666, un procédé de préparation de matériaux comportant des nanoparticules de métal noble et des nanoparticules d'oxydes d'un métal réducteur, le métal réducteur étant choisi dans la colonne IVB de la classification périodique des éléments, à savoir parmi le titane, le zirconium et.le hafnium.

Cependant, des essais réalisés par les inventeurs ont montré que, parmi les nombreux couples métal noble/métal réducteur décrits dans ce document, seul le couple Au/Zr permettait d'obtenir effectivement un matériau comprenant des nanoparticules de métal noble et des nanoparticules d'oxyde du métal réducteur. Ainsi, il apparaît que ce document ne peut pas être raisonnablement vu comme proposant un enseignement pertinent pour former un matériau comprenant des nanoparticules de métal noble et des nanoparticules d'oxyde.

Les inventeurs ont maintenant découvert qu'en replaçant tout ou partie d'un métal non noble (ou métal réducteur) prévu dans FR 2 779 666 par une terre rare, et en formant un alliage métallique métal noble/terre rare présentant une phase cristallisée dont la composition répond à des critères précis, il est possible d'obtenir le résultat attendu en terme de structure du matériau, quelque soit l'alliage utilisé.

Ainsi, selon un premier aspect, l'invention a pour objet un procédé de préparation d'un matériau comprenant un mélange de nanoparticules de métal noble et de nanoparticules d'oxydes de terres rares, comprenant les étapes successives suivantes :
a) préparation d'un alliage métallique comprenant au moins un métal noble choisi parmi les éléments Ru, Rh, Ir, Ag, Au, Pd, Pt, Ni, Cu, et au moins une terre rare choisie parmi les éléments La, Ce, Pr, Nd, Pm, Sm, Eu, Gd, Tb, Dy, Ho, Er, Tm, Yb, Lu, Y, Sc, ledit alliage contenant une phase cristallisée dont la composition en terre rare est supérieure à 10% atomique et dont la composition en métal noble est comprise entre 25 et 75% atomique ;
b) oxydation de l'alliage métallique obtenu au cours de l'étape a), sous atmosphère oxydante.

Un tel procédé permet d'obtenir de façon maîtrisée un matériau comprenant des nanoparticules de nature différente : des nanoparticules de métal noble et des nanoparticules d'oxyde d'une terre rare.

Selon un premier mode de réalisation, le matériau obtenu est un matériau binaire, dans lequel toutes les nanoparticules de métal noble sont constituées par le même métal noble ou par un alliage de métaux nobles, et toutes les nanoparticules d'oxyde de terre rare contiennent la même terre rare.

Selon un deuxième mode de réalisation, le procédé selon l'invention permet d'obtenir un matériau ternaire, quaternaire, ou d'ordre supérieur. Dans un tel matériau, les nanoparticules de métal noble sont constituées par un mélange de nanoparticules de métaux nobles différents (par exemple un mélange de nanoparticules d'un métal noble MN₁ et de nanoparticules d'un métal noble MN₂) et/ou par des nanoparticules d'un alliage de métaux nobles (nanoparticules de MN1-MN2), et les nanoparticules d'oxyde d'une terre rare sont constituées par un mélange de nanoparticules d'oxydes de terres rares différentes (par exemple un mélange de nanoparticules d'oxyde d'une terre rare TR₁ et de nanoparticules d'oxyde d'une terre rare TR₂) et/ou par des nanoparticules d'un alliage d'oxydes selon les éléments d'addition comprenant au moins un oxyde de terre rare.

Selon une réalisation, l'alliage préparé lors de l'étape a) peut comprendre en outre au moins un métal de transition choisi parmi les éléments de la colonne IVB de la classification périodique des éléments : Ti, Zr, Hf, de la colonne VIB : V, Nb, Ta, de la colonne VIB : Cr, Mo, W, de la colonne VIIB : Mn, Tc, Re, de la colonne IIB : Zn, Cd, Hg, et les éléments Fe, Co, Os.

On peut ainsi obtenir un matériau ternaire dans lequel toutes les nanoparticules de métal noble sont constituées par le même métal noble, toutes les nanoparticules d'oxyde de terre rare contiennent la même terre rare, et toutes les nanoparticules d'oxyde de métal de transition contiennent le même métal de transition.

On peut également obtenir un matériau quaternaire, ou d'ordre supérieur. Dans un tel matériau, les nanoparticules de métal noble sont constituées par un mélange de nanoparticules de métaux nobles différents (par exemple un mélange de nanoparticules d'un métal noble MN₁. et de nanoparticules d'un métal noble MN₂), les nanoparticules d'oxyde d'une terre rare sont constituées par un mélange de nanoparticules d'oxydes de terres rares différentes (par exemple un mélange de nanoparticules d'oxyde d'une terre rare TR₁ et de nanoparticules d'oxydes d'une terre rare TR₂), ou par des nanoparticules contenant un alliage de plusieurs terres rares et les nanoparticules d'oxyde de métal de transition contiennent un mélange d'oxydes de métaux de transition différents (par exemple un mélange de nanoparticules d'oxyde d'un métal de transition MT₁ et de nanoparticules d'oxyde d'un métal de transition MT₂) ou un alliage de plusieurs métaux de transition.

Lorsque de tels matériaux composites mixtes sont utilisés en catalyse, leur activité catalytique peut s'avérer supérieure à celle d'un matériau composite simple ne comportant qu'un seul type d'oxyde formant support pour le métal noble.

On peut également prévoir que, dans l'alliage préparé lors de l'étape a), la terre rare soit partiellement remplacée par un élément de la famille des actinides choisi parmi Ac, Th, Pa.

L'étape a) du procédé selon l'invention, qui consiste à préparer l'alliage métallique, peut être réalisée par diverses méthodes connues de l'homme du métier. Par exemple, cette étape peut être réalisée par fusion des éléments purs, par exemple au four à arc, ou par métallurgie des poudres ou des couches minces chauffées à une température supérieure ou égale à 200°C, ou encore par synthèse mécanique à partir des éléments purs ou d'alliages, réalisée à basse température et de préférence à température ambiante.

Lorsque l'étape a) est réalisée à une température supérieure à 50°C, elle est de préférence effectuée sous atmosphère inerte ou réductrice afin d'éviter l'oxydation de l'alliage.

L'étape b) du procédé selon l'invention, qui consiste à oxyder l'alliage préparé lors de l'étape a), est de préférence réalisée à une température inférieure à 800°C.

Selon une réalisation, l'étape b) est réalisée à température ambiante, et peut également s'effectuer à l'air.

Par ailleurs, entre les étapes a) et b), on peut prévoir une étape de traitement thermique de l'alliage métallique à une température comprise entre 200°C et 1000°C, sous atmosphère inerte ou réductrice. Une telle étape permet d'obtenir différentes microstructures de l'alliage métallique formé lors de l'étape a).

On peut également prévoir, entre les étapes a) et b), et éventuellement- en complément de l'étape de traitement thermique mentionnée ci-dessus, une étape de broyage de l'alliage métallique destinée à accélérer la cinétique d'oxydation lors de l'étape b).

En outre, le procédé selon l'invention peut comprendre, après l'étape b), une étape de broyage mécanique ou de traitement par des ultrasons de la poudre obtenue, cette étape étant destinée à modifier (le cas échéant à diminuer) la taille des particules obtenues.

On peut également prévoir, après l'étape b), une étape de traitement thermique de coalescence destinée à ajuster la taille des particules obtenues. Cette étape peut également avantageusement se combiner avec l'étape b) d'oxydation de l'alliage métallique, en choisissant la température d'oxydation de manière appropriée. La température utilisée lors de cette étape de traitement thermique de coalescence dépend des éléments constituant l'alliage, et doit être choisie notamment de sorte à ne pas dépasser le point de fusion de chaque élément.

Selon un deuxième aspect, l'invention porte sur un matériau composite comprenant un mélange comprenant d'une part des nanoparticules d'au moins un métal noble choisi parmi les éléments Ru, Rh, Ir, Ag, Au, Pd, Pt, Ni, Cu, étant entendu que les- nanoparticules de métal noble peuvent être toutes constituées par le même métal noble, ou bien être constituées par un mélange de nanoparticules de métaux nobles différents (par exemple un mélange de nanoparticules d'un métal noble MN₁ et de nanoparticules d'un métal noble MN₂), et/ou par des nanoparticules d'un alliage de métaux nobles (nanoparticules de MN1-MN2) et d'autre part des nanoparticules d'au moins un oxyde d'une terre rare, ladite terre rare étant choisie parmi les éléments La, Ce, Pr, Nd, Pm, Sm, Eu, Gd, Tb, Dy, Ho, Er, Tm, Yb, Lu, Y, Sc, étant entendu que les nanoparticules d'oxyde d'une terre rare peuvent toutes contenir la même terre rare, ou bien être constituées par un mélange de nanoparticules contenant des terres rares différentes (par exemple un mélange de nanoparticules d'oxyde d'une terre rare TR₁ et de nanoparticules d'oxyde d'une terre rare TR₂), et/ou par des nanoparticules d'un alliage d'oxydes de plusieurs terres rares et/ou de métaux de transition selon les éléments d'addition, lesdites nanoparticules présentant une granulométrie inférieure à 20 nm. Ce matériau a pour particularité de posséder un pourcentage massique de métal noble élevé, supérieur ou égal à 20%.

Le matériau selon l'invention se présente sous forme d'une poudre contenant des agglomérats poreux dont la taille varie du micron à quelques centaines de microns, les agglomérats étant eux-mêmes constitués d'un mélange intime de particules et éventuellement de fils de métal noble et d'oxydes de terres rares, de granulométrie inférieure à 20 nm.

De tels matériaux présentent une surface spécifique élevée, de l'ordre de 60 m²/g et une concentration importante en métal noble, ce qui les rend particulièrement intéressants notamment pour une utilisation dans le domaine de la catalyse.

Le matériau de l'invention peut comprendre en outre des nanopàrticules d'au moins un oxyde d'un métal de transition, ledit métal de transition étant choisi parmi les éléments de la colonne IVB de la classification périodique des éléments : Ti, Zr, Hf, de la colonne VB : V, Nb, Ta, de la colonne VIB : Cr, Mo, W, de la colonne VIIB : Mn, Tc, Re, de la colonne IIB : Zn, Cd, Hg, et Fe, Co, Os, étant entendu que les nanoparticules d'oxyde de métal de transition peuvent toutes contenir le même métal de transition, ou bien être constituées par un mélange de nanoparticules d'oxydes de métaux de transition différents (par exemple un mélange de nanoparticules d'oxyde d'un métal de transition MT₁ et de nanoparticules d'oxyde d'un métal de transition MT₂), ou par des nanoparticules contenant un alliage de plusieurs métaux de transition et/ou de terres rares.

Le matériau composite selon l'invention peut également comprendre des nanoparticules d'au moins un oxyde d'un élément de la famille des actinides, ledit élément étant choisi parmi Ac, Th, Pa.

Comme indiqué plus haut, les matériaux selon l'invention peuvent être avantageusement utilisés dans le domaine de la catalyse, comme certains des exemples ci-après le montrent. Ils peuvent également être utilisés dans d'autres domaines, tels que la fabrication d'instruments d'optique non linéaire ou l'élaboration de poudres d'oxydes nanométriques pour la fabrication de céramiques frittées par exemple.

La présente invention est illustrée ci-après par des exemples concrets de réalisation, auxquels elle n'est cependant pas limitée.

Tous les alliages métalliques présentés dans ces exemples ont été synthétisés par fusion au four à arc sous une atmosphère d'argon.

Les matériaux ont été caractérisés notamment par diffraction des rayons X (KαCo et KαCu), les spectres de diffraction montrant l'intensité I, en unités arbitraires, en fonction de l'angle de diffraction 2θ. La taille des particules a été estimée à l'aide de l'équation de Scherrer.

Les exemples 1 à 13 et 21 à 25 décrivent la préparation et la caractérisation de matériaux obtenus selon le procédé de l'invention, et l'activité catalytique de certains d'entre eux. Les résultats obtenus en oxydation simple de CO sont représentés sur les figures 5, 11, 21 et 43c et les résultats obtenus en oxydation sélective de CO en présence d'hydrogène sont représentés sur les figures 6, 12, 22, avec en ordonnée le taux de conversion du CO (noté C, en pourcentage), et en abscisse la température T, en degrés Celsius. Les figures 7 et 13 représentent en ordonnée le taux de sélectivité S, en pourcentage, et en abscisse la température T, en degrés Celsius, pour l'oxydation sélective de CO en présence d'hydrogène.

Les exemples 14 à 20 décrivent trois séries d'expériences comparatives, chaque série présentant un exemple d'alliage binaire correspondant à la définition donnée dans le document FR 2 779 666 et un ou deux exemples d'alliage ternaire obtenu par addition de cérium à l'alliage binaire, selon le procédé de l'invention.

Pour ces exemples, l'oxydation a été réalisée lors de l'analyse thermogravimétrique de l'alliage réalisée sous air de 25°C à 800°C, avec une vitesse de chauffage de 10°C/min.

Les figures qui représentent les résultats d'analyse thermogravimétrique font apparaître chacune trois ordonnées : le flux thermique F en µV.S/mg, la température T, en degrés Celsius, et la masse M, en mg, en fonction du temps t, en secondes. Sur chacune de ces figures, les courbes notées (a), (b), (c) correspondent respectivement à la variation du flux thermique F, à la variation de la température T et à la variation de la masse M.

### Exemple 1

### Matériau composite Au/CeO₂

### Préparation

L'alliage équiatomique CeAu a été synthétisé à partir des éléments Au et Ce de pureté voisine de 99%. La synthèse est réalisée dans un creuset refroidi à l'eau pour éviter la contamination de l'alliage. L'alliage a ensuite été broyé grossièrement, pour obtenir une taille de grains variant de quelques dizaines à quelques centaines de microns, puis oxydé par exposition à l'air avec 60% d'humidité relative, à une température de 60°C.

### Caractérisation

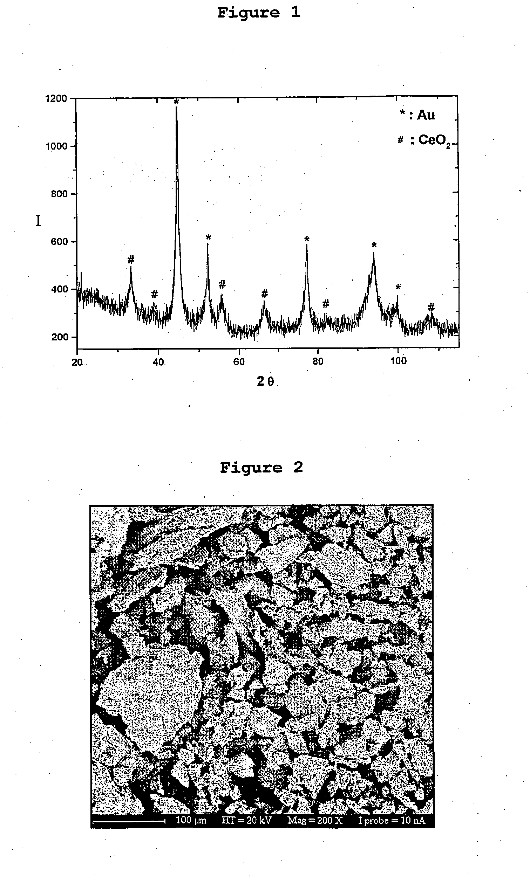

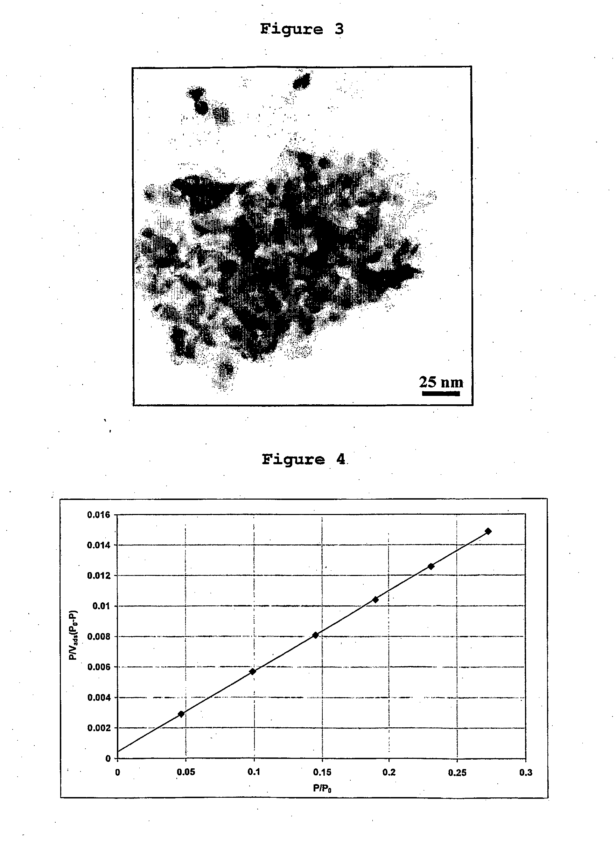

La caractérisation de la poudre obtenue a été réalisée par diffraction des rayons X (figure 1), par microscopie électronique à balayage (figure 2), par micrographie électronique à transmission (figure 3), et en mesurant la surface spécifique par la méthode BET (figure 4, qui représente l'isotherme d'adsorption BET (P/V_{ads}(P₀-P) en fonction de P/P₀) de l'azote à 77K).

La figure 1 montre que la poudre obtenue se compose de particules d'or d'une taille voisine de 8 nm, et de particules de cérine CeO₂, également de taille nanométrique.

Le cliché de la figure 2 révèle que les particules d'or et de cérine forment des agglomérats de taille variant d'une dizaine de microns à une centaine de microns. Ces agglomérats sont très poreux et sont constitués d'un mélange de nanoparticules d'or et de nanoparticules de cérine.

L'expansion volumique se produisant au cours de l'étape d'oxydation de l'alliage entraîne une division des agglomérats, ce qui explique la grande distribution de taille, et conduit parallèlement à la formation de nanoparticules visibles par micrographie électronique à transmission. La figure 3 montre ainsi un cliché des nanoparticules d'or du matériau Au/CeO₂, l'oxyde ayant été préalablement séparé de l'or par dissolution dans une solution d'acide fluorhydrique.

La morphologie de la poudre obtenue est confirmée par la valeur élevée de la surface spécifique. A partir de la courbe de la figure 4, on déduit une surface spécifique BET du matériau égale à 80 m².g⁻¹.

Le pourcentage massique en or dans le matériau est de 53,4%.

### Activité catalytique

L'activité catalytique de la poudre obtenue est examinée en mesurant le taux de conversion du CO en fonction de la température.

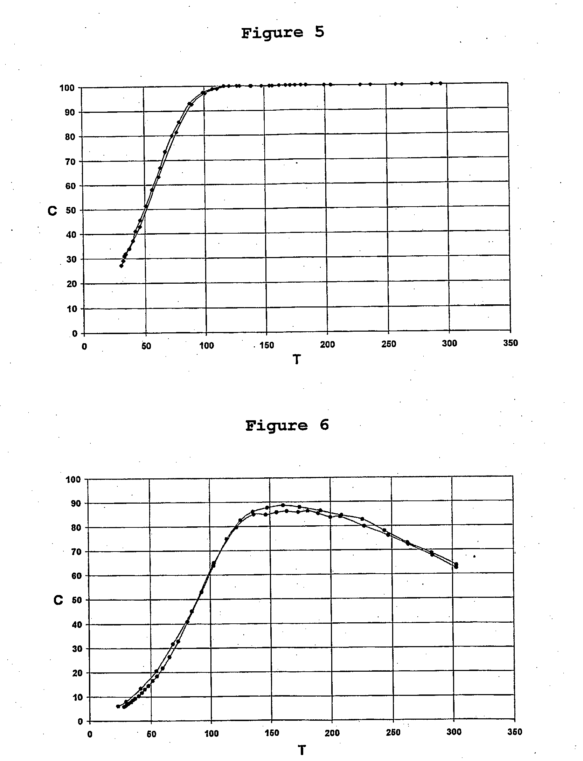

La figure 5 montre les résultats obtenus en faisant passer un mélange gazeux constitué de 2% CO, et 2% O₂ dans l'hélium sur 10 mg de poudre, avec un débit de 50 ml.min⁻¹. Il apparaît que l'activité catalytique du matériau obtenu lors de l'oxydation de CO est comparable à celle des meilleurs catalyseurs à base d'or préparés par des méthodes chimiques conventionnelles pour une même charge d'or.

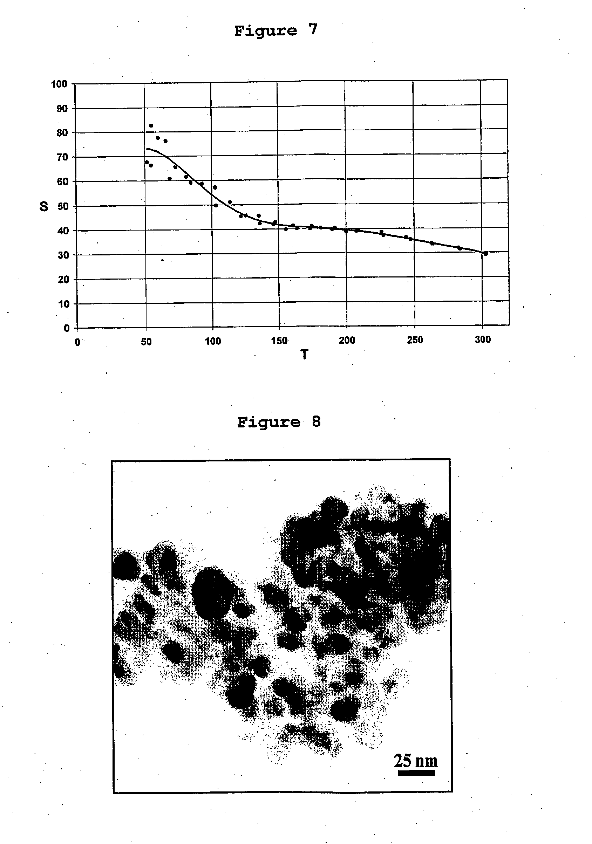

La figure 6 montre les résultats d'une étude d'oxydation sélective de CO en présence d'hydrogène, les propriétés catalytiques ayant été mesurées pour un mélange réactionnel constitué de 2% CO, 2% O₂, et 48% H₂ dans l'hélium, avec un débit de 50 ml.min⁻¹. Les tests ont été effectués avec 10 mg de poudre. Le maximum de conversion est obtenu à 150°C et la sélectivité de ce catalyseur est du même ordre que celle des catalyseurs usuels (figure 7).

### Exemple 2

### Matériau composite Au/ZrO₂(50)/CeO₂(50)

### Préparation

L'alliage ternaire Zr_{0,5}Ce_{0,5}Au a été synthétisé à partir des éléments Au, Zr et Ce de pureté voisine de 99%. L'alliage métallique obtenu est multiphasé et composé majoritairement d'une phase ZrAu et d'une phase CeAu. L'alliage métallique, après un broyage grossier, a été oxydé à l'air à température ambiante.

Une étape supplémentaire de traitement de la poudre par ultrasons (20 kHz pendant 10 minutes) a ensuite été mise en oeuvre.

Ce traitement supplémentaire peut être utilisé pour obtenir une forme particulière du matériau, requise pour l'application envisagée. Il peut aussi être avantageusement utilisé pour contrôler la taille des nanoparticules obtenues, notamment pour une utilisation en catalyse en phase liquide pour laquelle la taille préconisée peut être supérieure à 20 nm (chimie fine).

### Caractérisation

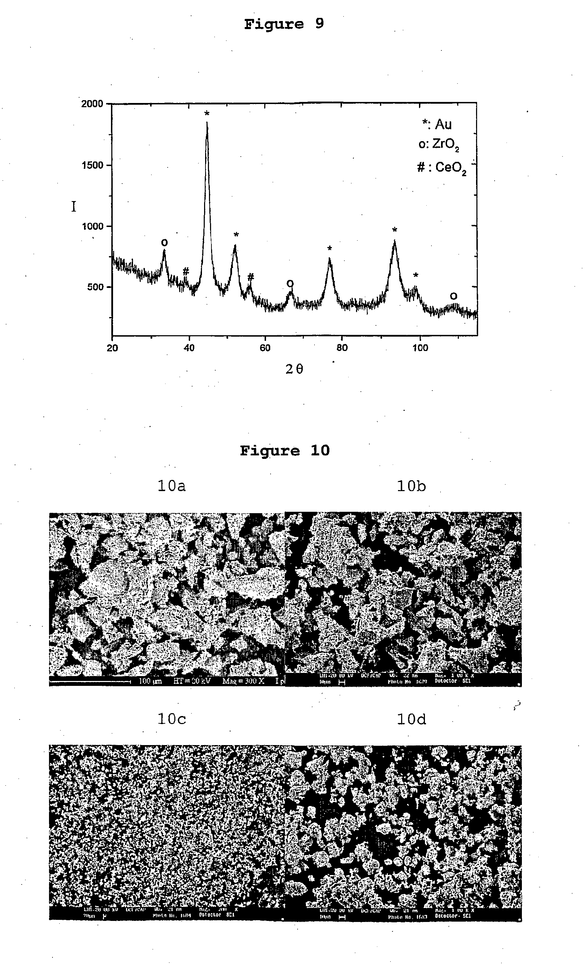

La caractérisation de la poudre obtenue a été réalisée par micrographie électronique à transmission (figure 8), par diffraction des rayons X (figure 9) et par micrographie électronique à balayage (figures 10a à 10d). Les figures 10a et 10b sont des clichés pris avant le traitement aux ultrasons, avec un grossissement respectif de 300X et 1000X. Les figures 10c et 10d sont des clichés pris après le traitement aux ultrasons, avec un grossissement respectif de 200X et 1000X.

L'analyse par micrographie électronique à transmission, réalisée avant l'étape de traitement par ultrasons, montre que la phase métallique (Au) est très largement dispersée (figure 8). La taille moyenne des entités de base est de l'ordre de 5 nm (figure 9).

L'étape supplémentaire de traitement de la poudre par ultrasons a permis de fragmenter les agglomérats constitués de nanoparticules d'or et de nanoparticules d'oxydes, et d'homogénéiser leur taille autour de 20 µm (figures 10a à 10d).

La morphologie de la poudre obtenue est confirmée par la valeur élevée de la surface spécifique (63,8 m²/g) mesurée par la méthode BET.

Le pourcentage massique en or dans le matériau est de 57,2%.

### Activité catalytique

L'activité catalytique a été mesurée pour un mélange réactionnel constitué de 1,72% CO et 3,7% O₂ dans l'azote avec un débit de 26 ml.min⁻¹ pour l'oxydation simple, et de 1,56% CO, 3,3% O₂ et 10% H₂ dans l'azote avec un débit de 29 ml.min⁻¹ pour l'oxydation sélective de CO en présence d'hydrogène. Les tests ont été effectués avec 8 mg de poudre mélangés à environ 800 mg d'alumine Al₂O₃. L'alumine est utilisée ici comme diluant car elle ne présente pas d'activité catalytique.

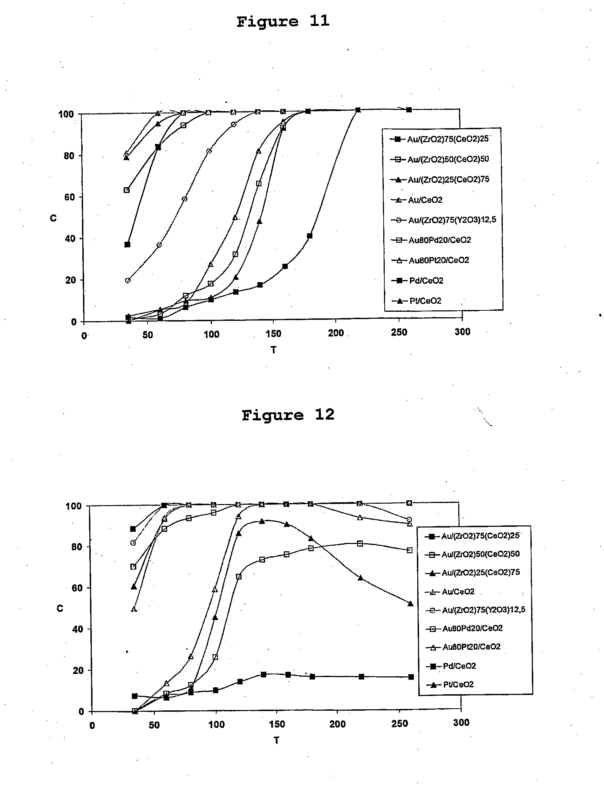

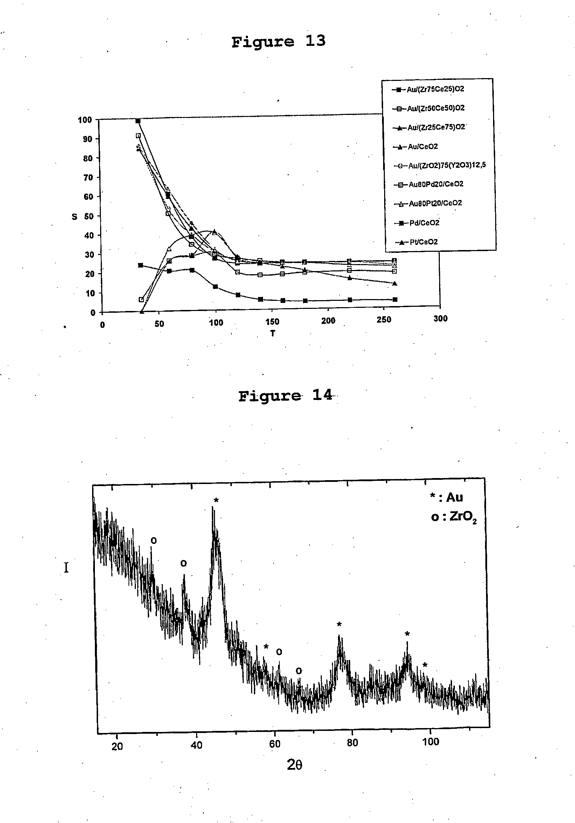

Il apparaît que l'activité catalytique pour l'oxydation de CO (figure 11) est comparable à celle des meilleurs catalyseurs à base d'or préparés par des méthodes chimiques conventionnelles pour une même charge d'or, soit un taux de conversion de 10% vers 100°C. Le maximum de conversion en oxydation préférentielle (figure 12) est obtenu au voisinage de 120 °C, et la sélectivité de ce catalyseur est de 100% à une température inférieure à 40°C, et reste du même ordre de grandeur que celle des catalyseurs usuels (figure 13).

### Exemple 3

### Matériau composite Au/ZrO₂(75)/CeO₂(25)

### Préparation

L'alliage ternaire de composition Zr_{0.75}Ce_{0.25}Au a été synthétisé à partir des éléments Au, Zr et Ce de pureté voisine de 99%. L'alliage métallique, après un broyage grossier, a été oxydé à l'air à une température de 80°C.

### Caractérisation

La caractérisation du précurseur métallique puis de la poudre obtenue après oxydation a été réalisée par diffraction des rayons-X.

L'alliage métallique est composé majoritairement des phases ZrAu et (Ce,Zr)₉Au₁₁. Dans cette dernière, le Zr substitue partiellement le Ce dans la phase Ce₉Au₁₁.

La figure 14 est le spectre de diffraction des rayons X réalisé après oxydation. La poudre obtenue se compose de particules d'or d'une taille voisine de 6 nm, et de zircone ZrO₂, également de taille nanométrique. La présence de particules de cérine CeO₂, de taille nanométrique, est difficilement identifiable en raison de sa faible concentration.

La surface spécifique, mesurée par la méthode BET est de 58,2 m²/g_{.}

Le pourcentage massique en or dans le matériau est de 59,3%.

### Activité catalytique

Les tests catalytiques sont réalisés dans les mêmes conditions que dans l'exemple 2. Il apparaît que l'activité catalytique du matériau obtenu lors de l'oxydation de CO (figure 11) est également comparable à celle des meilleurs catalyseurs à base d'or préparés par des méthodes chimiques conventionnelles pour une même charge d'or, soit un taux de conversion de 100% vers 75°C. Le maximum de conversion en oxydation préférentielle (figure 12) est obtenu au voisinage de 60°C et la sélectivité de ce catalyseur est de 100% à une température inférieure à 40°C (figure 13).

### Exemple 4

### Matériau composite Au/ZrO₂(25)/CeO₂ (75)

### Préparation

L'alliage ternaire de composition Zr_{0.25}Ce_{0.75}Au a été synthétisé à partir des éléments Au, Zr et Ce de pureté voisine de 99%. L'alliage métallique, après un broyage grossier, a été oxydé à l'air à température ambiante.

### Caractérisation

La caractérisation du précurseur métallique puis de la poudre obtenue après oxydation a été réalisée par diffraction des rayons-X.

L'alliage métallique est composé majoritairement de la phase CeAu, environ 80%, et de la phase ZrAu.

La poudre obtenue, après oxydation, se compose de particules d'or d'une taille voisine de 7 nm, et de particules de cérine CeO₂ et de zircone ZrO₂, également de taille nanométrique.

Le pourcentage massique en or dans le matériau est de 55,2%.

### Activité catalytique

Les tests catalytiques sont réalisés dans les mêmes conditions que dans l'exemple 2.

La figure 11 montre un taux de conversion de 100% vers 75°C, pour l'oxydation de CO.

Pour l'oxydation sélective de CO en présence d'hydrogène, le maximum de conversion est obtenu au voisinage de 60°C (figure 12) et la sélectivité maximale est obtenue à une température inférieure à 40°C, et reste du même ordre que celle des catalyseurs usuels (figure 13).

### Exemple 5

### Matériau composite Pd/CeO₂

### Préparation

L'alliage binaire de composition Ce_{0.5}Pd_{0.5} a été synthétisé à partir des éléments Pd et Ce de pureté voisine de 99%. L'alliage métallique, après un broyage grossier, a été oxydé à l'air à une température de 80°C sous une humidité relative de 100%.

### Caractérisation

La caractérisation du précurseur métallique puis de la poudre obtenue après oxydation a été réalisée par diffraction des rayons X.

L'alliage métallique est monophasé et se compose de la phase CePd.

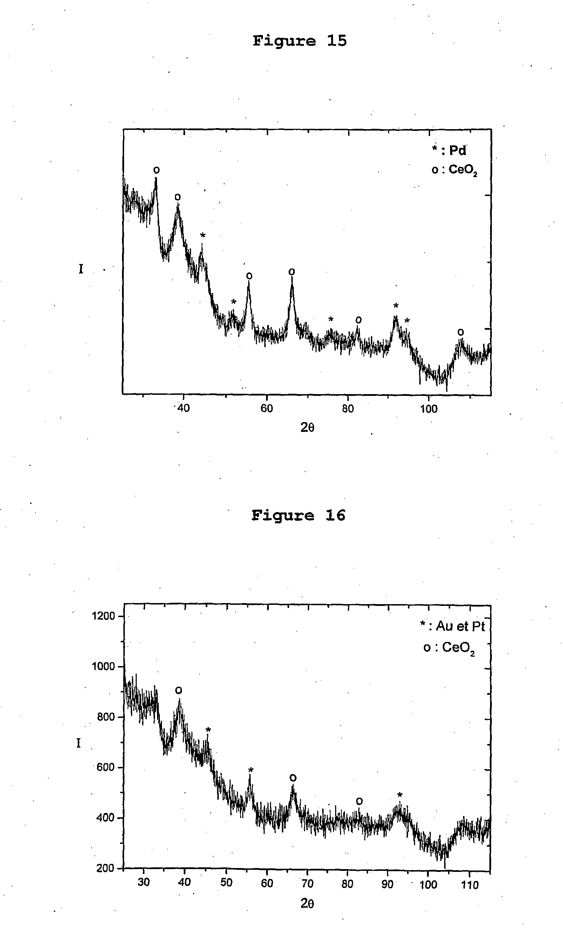

La figure 15 est le spectre de diffraction des rayons X réalisé après oxydation, montrant que la poudre obtenue se compose de particules de palladium d'une taille voisine de 5 nm, et de particules de cérine CeO₂ également de taille nanométrique (7 à 9 nm).

Le pourcentage massique en palladium dans le matériau est de 38,2%.

### Activité catalytique

Les tests catalytiques sont réalisés dans les mêmes conditions que dans l'exemple 2. Bien que la taille des particules de palladium soit inférieure à 10 nm, le composite Pd/CeO₂ n'est actif qu'à haute température (220°C) en conversion de CO (fig. 11), et ne présente qu'une faible activité en oxydation préférentielle en présence d'hydrogène (fig. 12) avec une conversion de CO maximale de 17,5%.

### Exemple 6

### Matériau composite Pt/CeO₂

### Préparation

L'alliage binaire de composition Ce_{0.5}Pt_{0.5} a été synthétisé à partir des éléments Pt et Ce de pureté voisine de 99%. L'alliage métallique, après, un broyage grossier, a été oxydé à l'air à une température de 80°C sous une humidité relative de 100%.

### Caractérisation

La caractérisation du précurseur métallique puis de la poudre obtenue après oxydation a été réalisée par diffraction dés rayons X.

L'alliage métallique est monophasé (phase CePt).

La poudre obtenue, après oxydation, se compose de particules de platine d'une taille inférieure à 10 nm et de particules de cérine CeO₂ également de taille nanométrique.

Le pourcentage massique en platine dans le matériau est de 53,1%.

### Activité catalytique

Les tests catalytiques sont réalisés dans les mêmes conditions que dans l'exemple 2. La température de conversion totale est de 170°C (fig. 11) et le maximum de conversion du CO en oxydation préférentielle en présence d'hydrogène (92%) est atteint à la température de 140°C (fig. 12).

### Exemple 7

### Matériau composite Au80, Pt20/CeO₂

### Préparation

L'alliage ternaire de composition Ce_{0.5}Pt_{0.1}Au_{0.4} a été synthétisé à partir des éléments Au, Pt et Ce de pureté voisine de 99%. L'alliage métallique, après un broyage grossier, a été oxydé à l'air à une température de 100°C sous une humidité relative de 100%.

### Caractérisation

La caractérisation du précurseur métallique puis de la poudre obtenue après oxydation a été réalisée par diffraction des rayons-X (K_{α}Co). L'alliage métallique est composé en majorité de la phase CeAu, seule détectée par diffraction des rayons X. Vu la forte solubilité du platine dans l'or,- il est cohérent de trouver une substitution de l'or par le platine dans la phase CeAu, donnant naissance au composé ternaire Ce(Au,Pt).

La figure 16 est le spectre de diffraction des rayons X réalisé après oxydation, montrant que la poudre obtenue se compose de particules d'or et de platine d'une taille voisine de 6 nm, et de particules de cérine CeO₂ également de taille nanométrique.

Le pourcentage massique en métal noble dans le matériau est de 53,3%.

### Activité catalytique

Les tests catalytiques sont réalisés dans les mêmes conditions que dans l'exemple 2. La température de conversion totale est de 170°C (fig. 11) et 100% de conversion du CO en oxydation préférentielle en présence d'hydrogène est atteint à la température de 140°C (fig. 12).

### Exemple 8

### Matériau composite Au80, Pd20/CeO₂

### Préparation

L'alliage ternaire de composition Ce_{0.5}Pd_{0.1}Au_{0.4} a été synthétisé à partir des éléments Au, Pd et Ce de pureté voisine de 99%. L'alliage métallique, après un broyage grossier, a été oxydé à l'air à une température de 100°C sous une humidité relative de 100%.

### Caractérisation

La caractérisation du précurseur métallique puis de la poudre obtenue après oxydation a été réalisée par diffraction des rayons-X. L'alliage métallique est composé en majorité de la phase CeAu, seule détectée par diffraction des rayons X. Vu la forte solubilité du palladium dans l'or, il est cohérent de trouver une substitution de l'or par le palladium dans la phase CeAu, donnant naissance au composé ternaire Ce(Au,Pd).

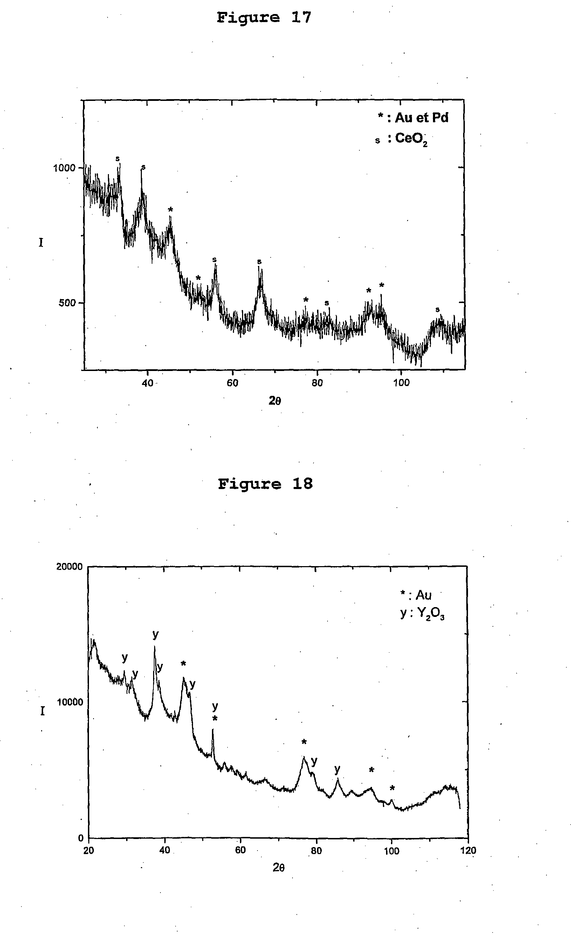

La figure 17 est le spectre de diffraction des rayons X réalisé après oxydation, montrant que la poudre obtenue se compose de particules d'or et de palladium d'une taille voisine de 4 nm, et de particules de cérine CeO₂ également de taille nanométrique.

Le pourcentage massique en métal noble dans le matériau est de 51%.

### Activité catalytique

Les tests catalytiques sont réalisés dans les mêmes conditions que dans l'exemple 2. La température de conversion totale est de 170°C (fig. 11) et le maximum de conversion du CO en oxydation préférentielle en présence d'hydrogène (80,5%) est atteint à la température de 220°C (fig. 12). Ces résultats sont cohérents avec la faible activité catalytique du palladium pour ces réactions d'oxydation (exemple 5), en accord avec les résultats de la littérature.

### Exemple 9

### Matériau composite Au/Y₂O₃

### Préparation

L'alliage binaire de composition Au_{0.5}Y_{0.5} a été synthétisé à partir des éléments Au et Y de pureté voisine de 99%. L'alliage monophasé (phase YAu) a été oxydé à l'air à température ambiante sans aucune étape préalable de broyage.

### Caractérisation

La caractérisation du précurseur métallique puis de la poudre obtenue après oxydation a été réalisée par diffraction des rayons-X (figure 18). Une taille de particules d'or voisine de 4 nm a été déduite de la largeur des pics de diffraction. Les particules d'oxyde d'yttrium sont également de taille nanométrique.

Le pourcentage massique en or dans le matériau est de 63,6%.

### Exemple 10

### Matériau composite Au/ZrO₂/Y₂O₃

### Préparation

L'alliage ternaire de composition Zr_{0.75}Y_{0.25}Au a été synthétisé à partir des éléments Au, Zr et Y de pureté voisine de 99%. L'alliage métallique, après un broyage grossier, a été oxydé à l'air à température ambiante.

### Caractérisation

La caractérisation du précurseur métallique puis de la poudre obtenue après oxydation a été réalisée par diffraction des rayons X. L'alliage métallique est composé majoritairement des phases ZrAu et YAu. Parmi les phases d'impuretés (<10%) aucun composé n'a pu être identifié.

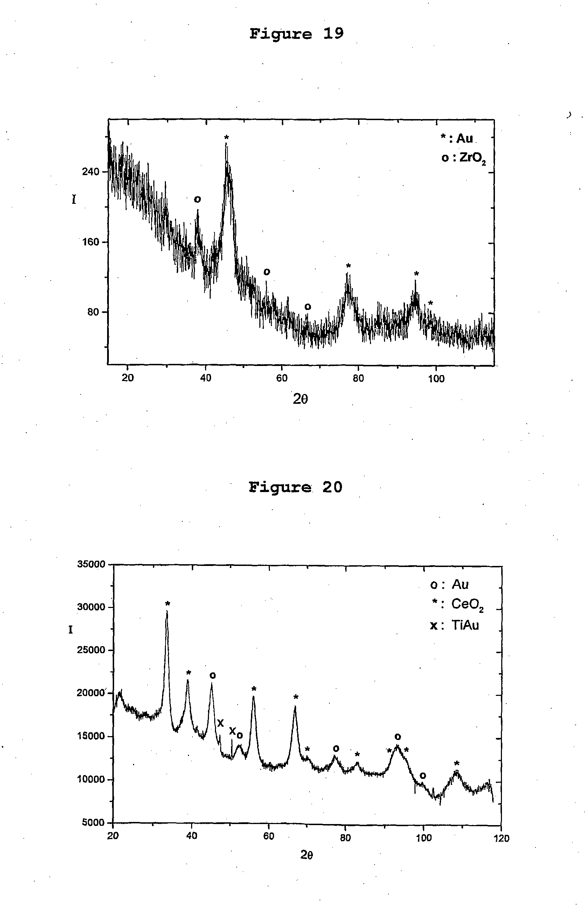

La figure 19 est le spectre de diffraction des rayons X réalisé après oxydation, montrant que la poudre obtenue se compose de particules d'or d'une taille voisine de 4 nm, et de particules d'oxydes Y₂O₃ et ZrO₂, également de taille nanométrique.

La morphologie de la poudre obtenue est confirmée par la valeur élevée de la surface spécifique (56,6 m²/g), mesurée par la méthode BET.

Le pourcentage massique en or dans le matériau est de 62%.

### Activité catalytique

Les tests catalytiques sont réalisés dans les mêmes conditions que dans l'exemple 2. La figure 11 montre que l'activité catalytique du matériau obtenu lors de l'oxydation de CO est comparable à celle des meilleurs catalyseurs à base d'or préparés par des méthodes chimiques conventionnelles pour une même charge d'or, soit un taux de conversion de 100% vers 135°C.

Pour l'oxydation sélective de CO en présence d'hydrogène, le maximum de conversion est obtenu au voisinage de 60°C (figure 12) et la sélectivité maximale de ce catalyseur est obtenue à une température inférieure à 40°C, et reste du même ordre que celle des catalyseurs usuels (figure 13).

### Exemple 11

### Matériau composite Au/TiO₂(15)/CeO₂ (65)

### Préparation

L'alliage ternaire de composition Ti_{0.15}Ce_{0.65}Au_{0.20} a été synthétisé à partir des éléments Au, Ti et Ce de pureté voisine de 99%. L'alliage métallique, après un broyage grossier, a été oxydé à l'air à une température de 80°C.

### Caractérisation

La caractérisation du précurseur métallique puis de la poudre obtenue après oxydation a été réalisée par diffraction des rayons X. L'alliage métallique est composé majoritairement des phases Ce₂Au et Ce, avec la phase TiAu en impureté.

La figure 20 est le spectre de diffraction des rayons X réalisé après oxydation, montrant que le poudre obtenue se compose de particules d'or d'une taille voisine de 6 nm, de cérine CeO₂ également de taille nanométrique, et de la phase TiAu, seule phase métallique qui ne s'est pas oxydée.

Le pourcentage massique en or dans le matériau est de 24,1%.

### Activité catalytique

Les propriétés catalytiques ont été mesurées pour un mélange réactionnel constitué de 2% CO et 2% O₂, dans l'hélium avec un débit de 50 ml.min⁻¹, pour l'oxydation simple, et de 2% CO, 2% O₂, et 48% H₂ dans l'hélium, avec un débit de 50 ml.min⁻¹, pour l'oxydation sélective de CO en présence d'hydrogène. Les tests ont été effectués avec 6 mg de catalyseur.

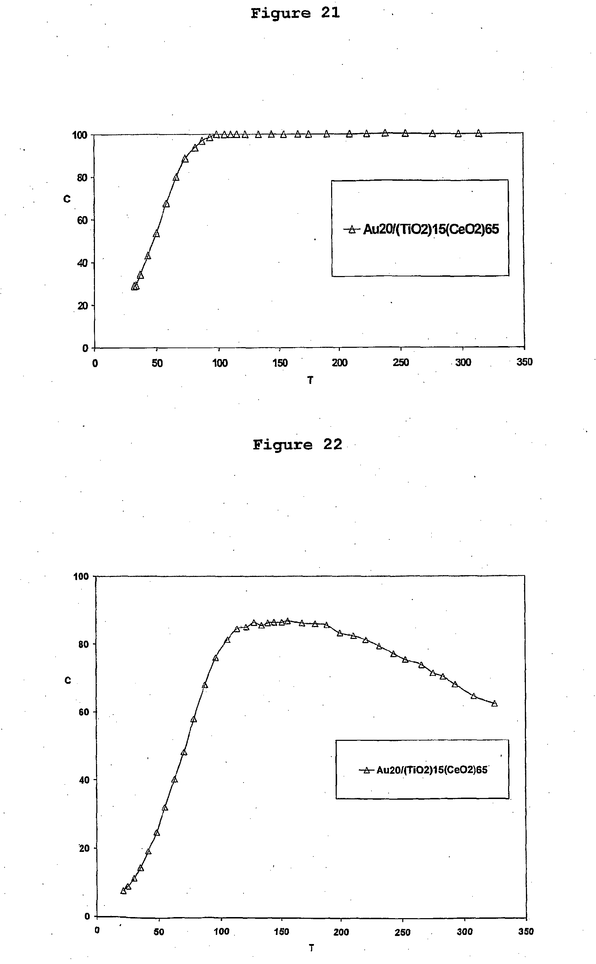

Les résultats obtenus en oxydation simple (figure 21) et en oxydation sélective en présence d'hydrogène (figure 22) montrent une activité comparable à celle des meilleurs catalyseurs à base d'or préparés par des méthodes chimiques conventionnelles pour une même charge d'or, soit un taux de conversion de 100% vers 90°C. Un maximum de conversion en oxydation préférentielle (90%) s'étend en température dans l'intervalle 110-175°C.

### Exemple 12

### Matériau composite Au/ZrO₂/TiO₂/CeO₂

### Préparation

L'alliage quaternaire de composition Zr_{0.125}Ti_{0.125}Ce_{0.25}Au_{0.5} a été synthétisé à partir des éléments Au, Zr, Ti et Ce de pureté voisine de 99%. L'alliage métallique, après un broyage grossier, a été oxydé à l'air à température ambiante.

### Caractérisation

La caractérisation du précurseur métallique puis de la poudre obtenue après oxydation a été réalisée par diffraction des rayons-X (K_{α}Cu).

L'alliage est multiphasé et comprend en majorité les phases CeAu et Ce₉Au₁₁ dans lesquelles le zirconium et le titane peuvent substituer partiellement le cérium.

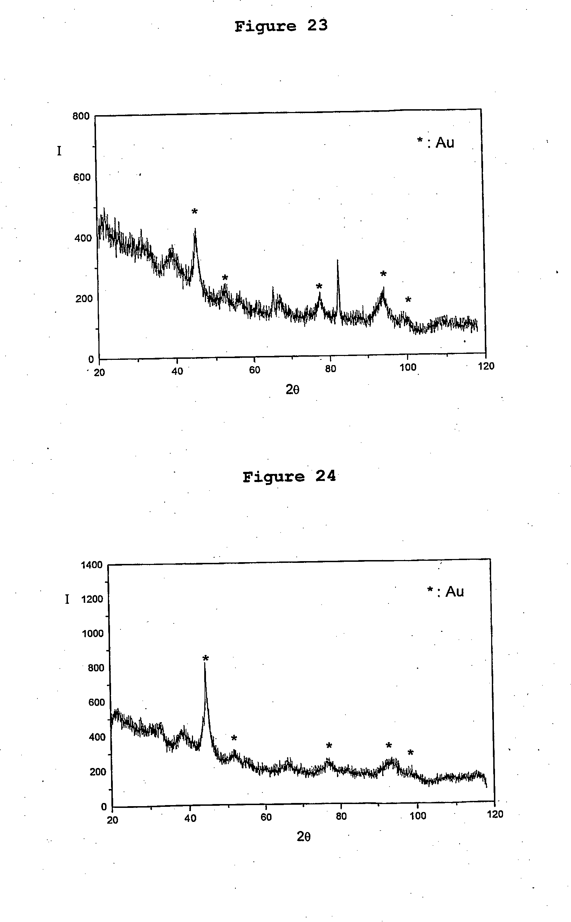

La figure 23 est le spectre de diffraction des rayons X réalisé après oxydation, montrant que la poudre obtenue se compose de particules d'or d'une taille voisine de 7 nm, et du mélange des oxydes CeO₂, TiO₂ et ZrO₂ également de taille nanométrique.

Le pourcentage massique en or dans le matériau est de 59%.

### Exemple 13

### Matériau composite Au/ZrO₂/TiO₂/Sm₂O₃/CeO₂

### Préparation

L'alliage quinaire de composition Zr_{0.125}Ti_{0.125}Sm_{0.125}Ce_{0.125}SAu_{0.50} a été synthétisé à partir des éléments Au, Zr, Ti, Sm et Ce de pureté voisine de 99%. L'alliage métallique, après un broyage grossier, a été oxydé à l'air à température ambiante.

### Caractérisation

La caractérisation du précurseur métallique puis de la poudre obtenue après oxydation a été réalisée par diffraction des rayons X. L'alliage métallique est multiphasé et comprend en majorité la phase (Ce,Sm)Au. Les autres phases présentes n'ont pas été identifiées.

La figure 24 est le spectre de diffraction des rayons-X réalisé après oxydation, montrant que la poudre obtenue se compose de particules d'or d'une taille voisine de 5 nm, et du mélange des oxydes CeO₂, Sm₂O₃, TiO₂ et ZrO₂ également de taille nanométrique.

Le pourcentage massique en or dans le matériau est de 58,9%.

### Exemple 14 comparatif

### Alliage Ti-Au

### Préparation

La phase α-TiAu monophasée a été synthétisée.

### Caractérisation

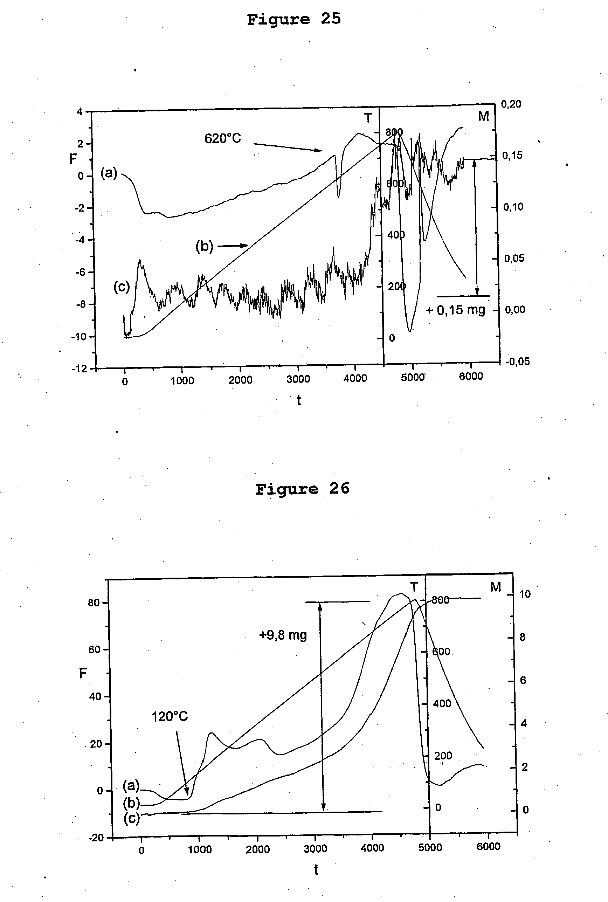

L'analyse thermogravimétrique de l'échantillon montre que la phase TiAu ne s'oxyde pas (fig. 25) avec une prise de masse négligeable de 0,15 mg (soit 3 %) qui intervient au voisinage de 700°C. On observe la transition structurale de la phase équiatomique métallique α-TiAu ↔ β-TiAu, détectée à 620°C. Lors du refroidissement, la transformation inverse, β-TiAu ↔ α-TiAu, s'opère car la phase TiAu n'est toujours pas oxydée et donc ne forme pas de nanoparticules d'oxyde de titane ni de nanoparticules d'or.

### Exemple 15

### Matériau composite Au/CeO₂/TiO₂

### Préparation

L'alliage Ce_{0,5}Ti_{0,5}Au a été synthétisé.

En outre, pour mesurer l'influence du choix de la température d'oxydation et de la durée de traitement sur la taille des nanoparticules, un échantillon de Ce_{0,5}Ti_{0,5}Au a été oxydé à 400°C à l'air, pendant 1h30.

### Caractérisation

L'analyse thermogravimétrique (fig. 26) réalisée sur l'échantillon de composition Ce_{0,5}Ti_{0,5}Au montre une prise de masse de 9,8 mg. Ce gain massique représente 64 % de la prise de masse attendue pour l'oxydation totale de l'échantillon, suivant la réaction :

Ce_{0,5}Ti_{0,5}Au + O₂ ↔ 0,5 CeO₂ + 0,5 TiO₂ + Au

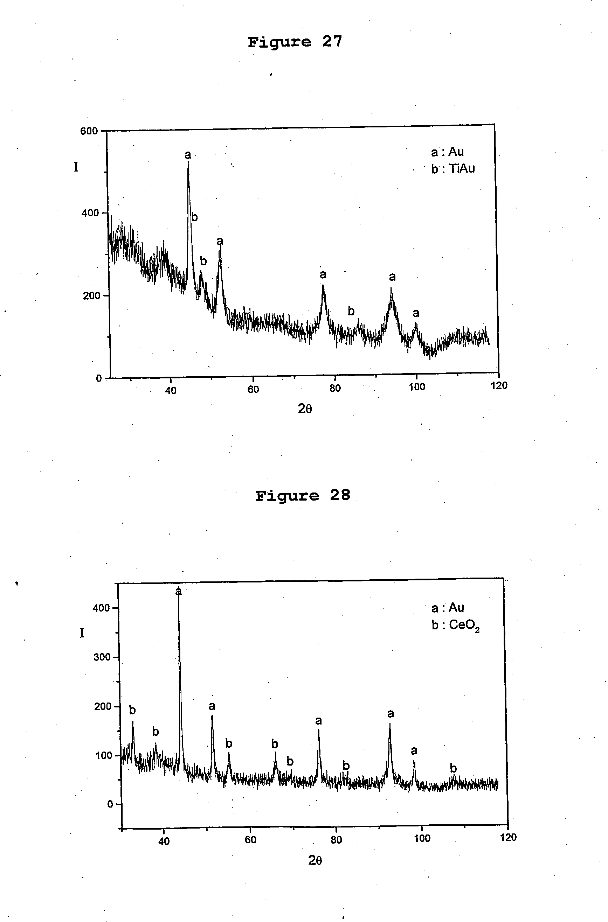

L'analyse par diffraction des rayons X de l'échantillon obtenu après thermogravimétrie montre que la phase TiAu ne s'est pas oxydée (fig. 27), et que la taille des domaines de cohérence des nanoparticules d'or est de l'ordre de 10 nm.

La présence de la phase TiAu métallique dans l'échantillon oxydé, en l'absence de phases binaires Ce-Au (très réactives vis à vis de l'oxygène) dans l'alliage métallique de départ, confirme que seule une phase ternaire (ou plusieurs phases ternaires) s'est oxydée.

En outre, comme l'illustre la figure 28, la taille des particules d'or obtenues à partir de l'échantillon Ce_{0,5}Ti_{0,5}Au oxydé à 400°C est de l'ordre de 30 nm après 1h30 de traitement. Le choix de la température d'oxydation et de la durée du traitement permet donc de modifier la taille des domaines de cohérence des particules d'or et ainsi de contrôler *in fine* les propriétés catalytiques du matériau nanocomposite.

Le pourcentage massique en or dans le matériau est de 61%.

### Exemple 16 comparatif

### Alliage TiPd

### Préparation

La phase α-TiPd monophasée a été synthétisée.

### Caractérisation

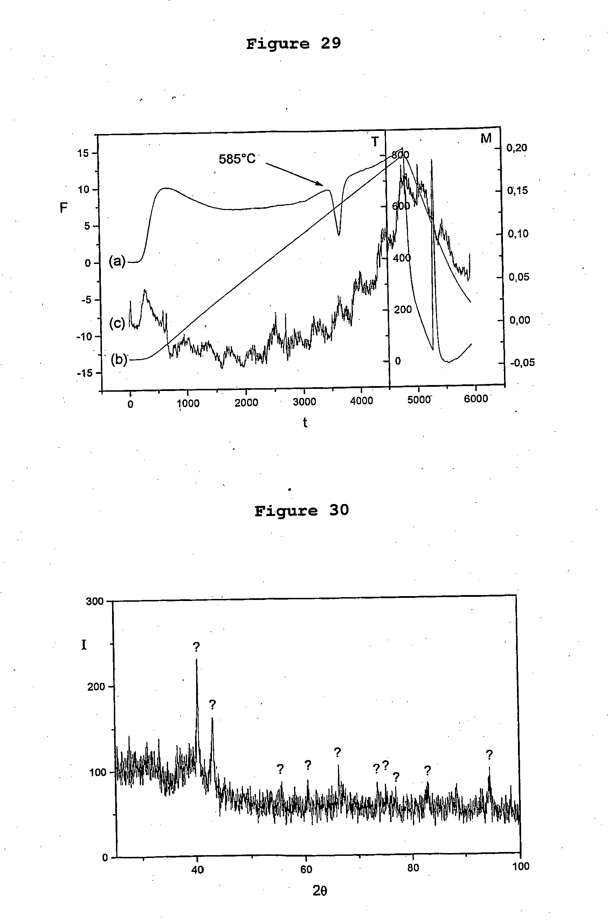

L'analyse par thermogravimétrie (fig. 29) montre que la phase TiPd n'a pas été oxydée, la prise de masse étant négligeable (0,05 mg soit 0,09 %). On observe uniquement la transition structurale de la phase équiatomique métallique α-TiPd ↔ β-TiPd, détectée à 585°C. Lors du refroidissement, la transformation inverse, β-TiPd ↔ α-TiPd, s'opère car la phase TiPd n'est toujours pas oxydée.

### Exemple 17

### Matériau composite Pd/CeO₂/TiO₂

### Préparation

L'alliage Ce_{0,5}Ti_{0,5}Pd a été synthétisé.

Une étape supplémentaire de traitement thermique de coalescence des particules de palladium de l'échantillon a également été mise en oeuvre, en soumettant l'échantillon à une température de 1000°C pendant 15 jours.

### Caractérisation

L'analyse par diffraction des rayons X dé l'échantillon brut de fusion présente des pics de diffraction (intensité > 20%) n'appartenant à aucune phase binaire répertoriée, ni à aucun élément pur, ni à aucun des deux oxydes CeO₂ et TiO₂ (fig. 30). Il en résulte qu'un ou plusieurs composés intermétalliques ternaires ont été synthétisés en majorité.

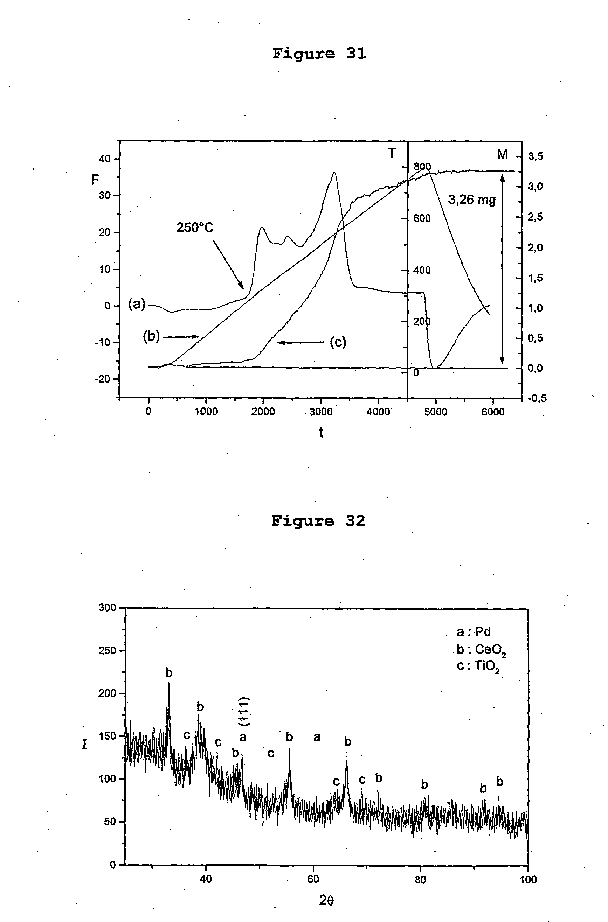

L'analyse thermogravimétrique (fig. 31) révèle une forte réactivité de l'échantillon dès 250°C conduisant à une prise de masse de 3,26 mg, qui représente 82 % de la prise de masse attendue pour l'oxydation totale de l'échantillon, suivant la réaction :

Ce_{0,5} Ti_{0,5}Pd + O₂ ↔ 0,5 CeO₂ + 0,5 TiO₂ + Pd

L'analyse par diffraction des rayons X (fig. 32) de l'échantillon après thermogravimétrie révèle la formation de palladium. Les particules et/ou les sections des agglomérats filamenteux de palladium sont de taille subnanométrique.

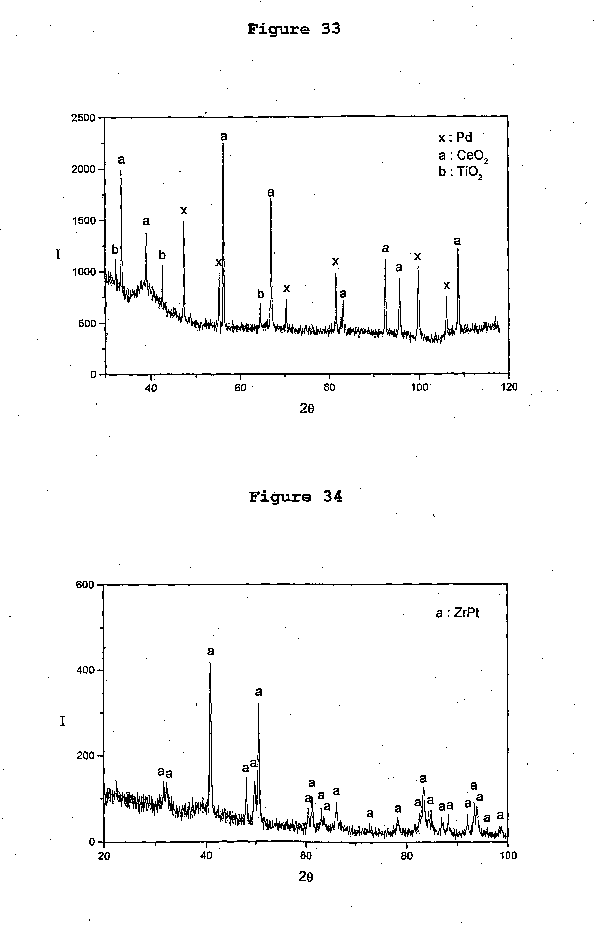

Le traitement thermique supplémentaire mis en oeuvre sur ce même alliage a permis de mettre en évidence la présence de palladium pur, de taille 60 nm, comme l'illustre la figure 33. En effet, la coalescence des particules (ou fils) de palladium (initialemént subnanométriques) permet d'augmenter la taille des domaines de cohérence.

Ainsi, les particules de palladium étant de taille subnanométrique, il est possible de choisir, dans le cas d'un matériau nanocomposite à base de palladium, la taille des particules dans une gamme très étendue : de subnanométrique à plusieurs dizaines de nanomètres. L'étude de la cinétique de croissance des particules de palladium permet de définir les paramètres optimaux pour obtenir le matériau nanocomposite désiré.

Le pourcentage massique en palladium dans le matériau est de 45,8%.

### Exemple 18 comparatif

### Alliage ZrPt

### Préparation

L'alliage Zr_{0,5}Pt_{0,5} a été synthétisé.

### Caractérisation

La figure 34, qui représente le diagramme de diffraction des rayons X de l'échantillon Zr_{0,5}Pt_{0,5} métallique, montre que le composé équiatomique ZrPt de structure cristalline type CrB orthorhombique (groupe d'espace *Cmcm*) a été formé à 100% ; l'alliage est donc monophasé en accord avec les données du diagramme de phases du système binaire Zr-Pt de la littérature.

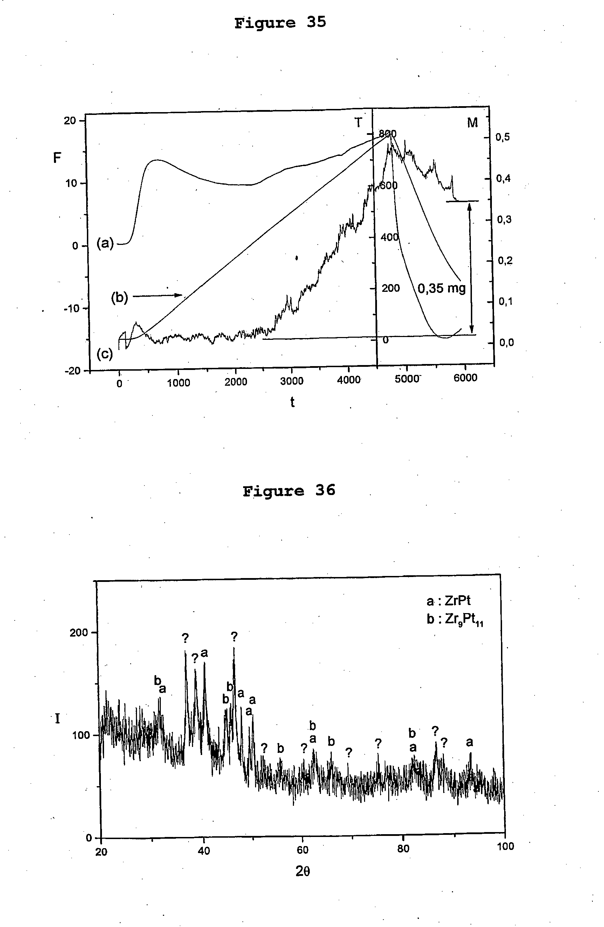

L'analyse thermogravimétrique (fig. 35) de l'échantillon Zr_{0,5}Pt_{0,5} montre que la phase ZrPt ne s'oxyde pas à l'air jusqu'à 800°C avec une prise de masse négligeable (0,35 mg soit 0,7 %).

### Exemple 19

### Matériau composite 1 du type Pt/CeO₂/ZrO₂

### Préparation

L'alliage Zr_{0,5}Ce_{0,5}Pt a été synthétisé.

### Caractérisation

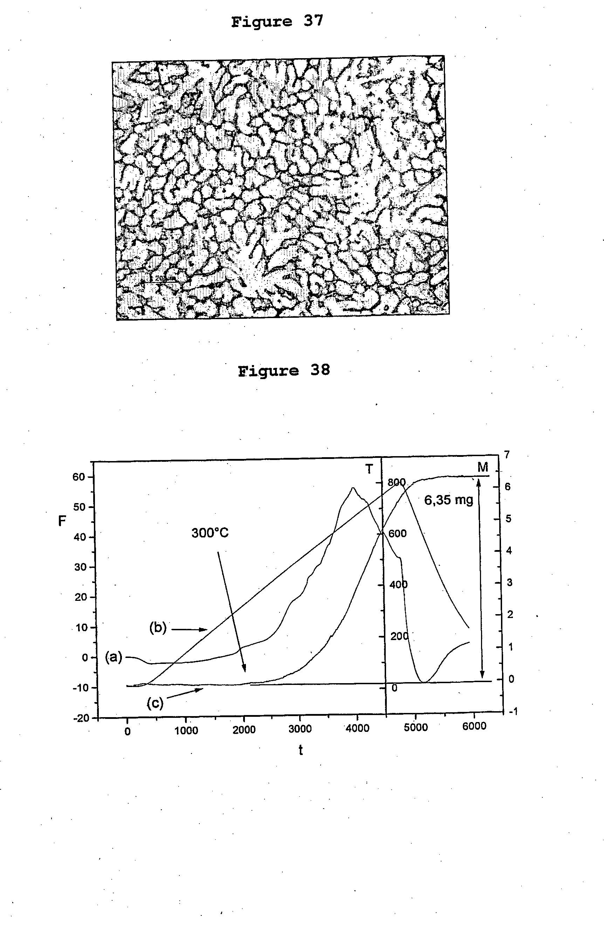

Le diagramme de diffraction des rayons X de l'échantillon Zr_{0,5}Ce_{0,5}Pt avant oxydation montre que l'alliage métallique est multiphasé. Seules deux phases binaires répertoriées dans la littérature ont été identifiées : ZrPt et Zr₉Pt₁₁ (fig. 36). Toutefois, l'analyse métallographique montre la présence d'une phase ternaire majoritaire (fig. 37). Sur cette image, le contraste de phase a été révélé par attaque chimique (HNO₃-HCl-éthanol). Les larges grains clairs proviennent de la cristallisation primaire de la phase ternaire, et les grains foncés proviennent de la cristallisation secondaire de ZrPt et Zr₉Pt₁₁.

L'analyse thermogravimétrique de l'alliage Zr_{0,5}Ce_{0,5}Pt (fig. 38) montre que l'oxydation de l'échantillon démarre au voisinage de 250°C et conduit à une prise de masse totale de 6,35 mg qui représente 90 % de la prise de masse attendue pour l'oxydation totale de l'échantillon, suivant la réaction :

Zr_{0,5}Ce_{0,5}Pt + O₂ ↔ 0,5 CeO₂ + 0,5 ZrO₂ + Pt

Compte tenu de la faible affinité des phases binaires Zr-Pt pour l'oxygène et du fait que le pourcentage de transformation de l'alliage métallique (90%) est voisin de la proportion de phase ternaire présente dans l'échantillon, il apparaît donc que la présence d'un composé intermétallique ternaire à base de cérium a permis d'oxyder l'alliage Zr_{0,5}Ce_{0,5}Pt à une température voisine de 250°C.

L'analyse thermogravimétrique a été poursuivie jusqu'à 800°C. La cinétique d'oxydation s'est accélérée conduisant à 90 % de transformation en 1h30. Ce même taux d'oxydation peut être également atteint après plusieurs heures à la température de début d'oxydation (250°C).

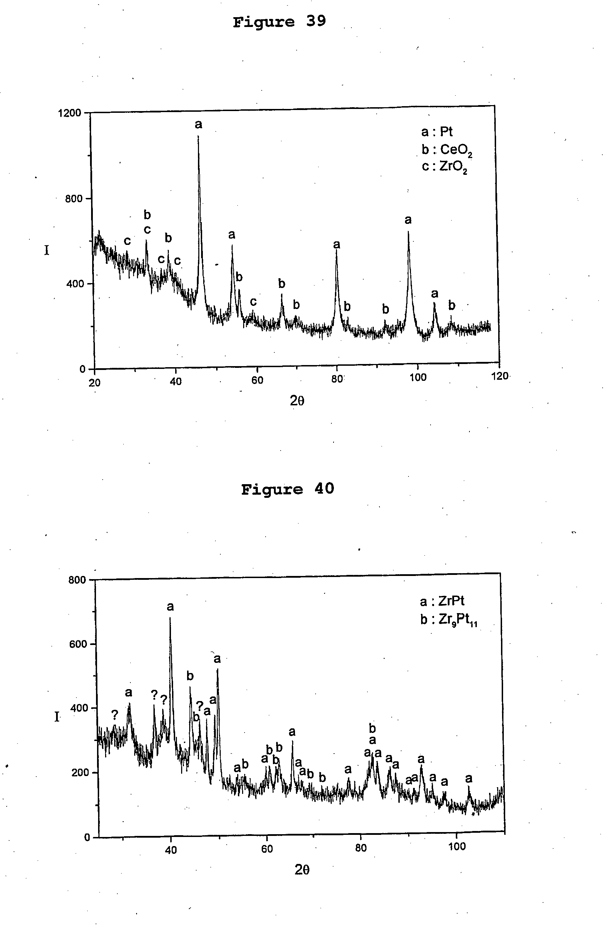

Le diagramme de diffraction des rayons X de l'échantillon après thermogravimétrie (fig. 39) confirme la formation du matériau composite Pt/CeO₂/ZrO₂ contenant des nanoparticules de platine et des agglomérats filamenteux dont la taille des domaines de cohérence (taille des particules ou section des fils) est de 20 nm.

Le pourcentage massique en platine dans le matériau est de 56,9%.

### Exemple 20

### Matériau composite 2 du type Pt/CeO₂/ZrO₂

### Préparation

Un alliage Zr_{0,75}Ce_{0,25}Pt, présentant une proportion de phase ternaire inférieure à celle de l'alliage précédent Zr_{0,5}Ce_{0,5}Pt, a été synthétisé.

### Caractérisation

L'analyse par diffraction des rayons X de l'échantillon avant oxydation montre que l'alliage est triphasé et se compose d'une phase ternaire et des phases ZrPt et Zr₉Pt₁₁ (figure 40).

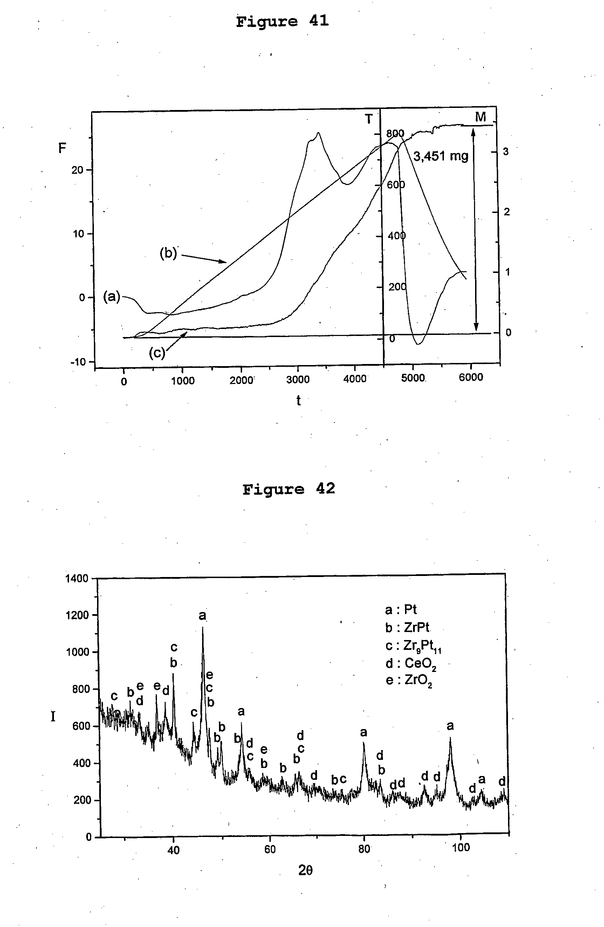

L'analyse thermogravimétrique de l'échantillon brut de fusion (figure 41), montre que l'alliage s'oxyde au voisinage de 300°C et conduit à une prise de masse de 3,451 mg qui représente 60 % de la prise de masse attendue pour l'oxydation totale de l'échantillon suivant la réaction :

Zr_{0,75}Ce_{0,25}Pt + O₂ ↔ 0,75 ZrO₂ + 0,25 CeO₂ + Pt

L'analyse par diffraction des rayons X de l'échantillon oxydé issu de l'analyse thermogravimétrique révèle la présence de platine pur et des oxydes CeO₂ et ZrO₂, ce qui indique la transformation d'une phase qui contenait Zr, Ce et Pt, donc ternaire. L'analyse montre également la présence des phases binaires ZrPt et Zr₉Pt₁₁ qui n'ont pas été oxydées (fig. 42). Cela confirme la formation du matériau composite Pt/CeO₂/ZrO₂ qui contient des nanoparticules de platine dont la taille des domaines de cohérence est voisine de 17 nm, du même ordre de grandeur que celui du platine estimé pour l'échantillon Zr_{0,5}Ce_{0,5}Pt (20 nm).

Le pourcentage massique en platine dans le matériau est de 59%.

Ainsi, les exemples 14 à 20 montrent que le procédé décrit dans le document FR 2 779 666 ne conduit pas aux résultats escomptés pour les composés binaires TiAu, TiPd et ZrPt. Il est démontré que la présence dans ces alliages métalliques d'une phase ternaire contenant une terre rare, en l'occurrence le cérium, permet de former un matériau composite comprenant des nanoparticules de métal noble et des nanoparticules d'oxyde.

### Exemple 21

### Matériau composite 1 du type Au/PrOₓ

### Préparation

L'alliage Pr₉Au₁₁ a été synthétisé à partir des éléments Au et Pr de pureté voisine de 99%. La synthèse est réalisée sous atmosphère inerte dans un creuset refroidi à l'eau pour éviter la contamination de l'alliage. L'alliage a ensuite été broyé grossièrement, pour obtenir une taille de grains variant de quelques dizaines à quelques centaines de microns, puis oxydé par exposition à l'air avec 60% d'humidité relative, à une température de 50°C.

### Caractérisation

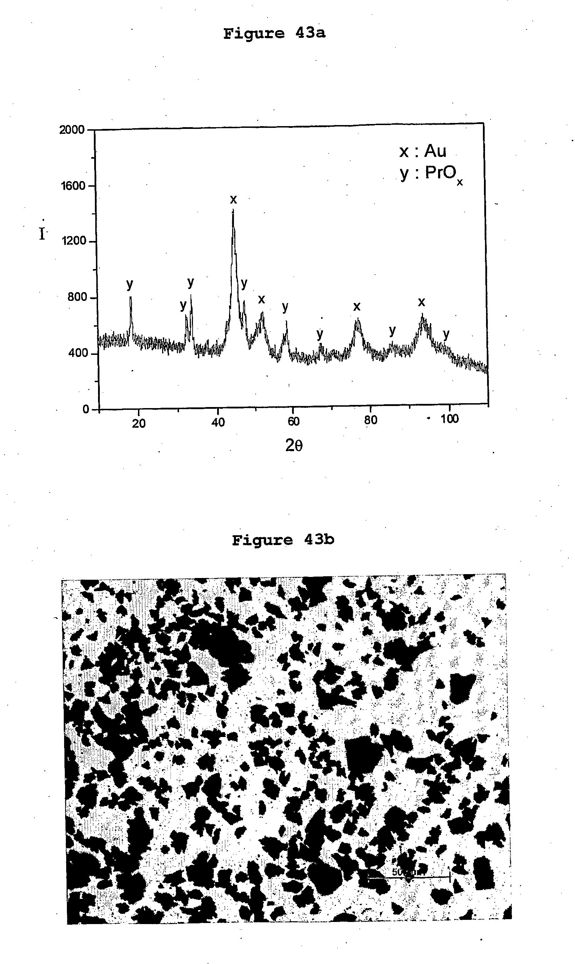

La caractérisation de l'alliage métallique précurseur (Pr₉Au₁₁) a été réalisée par diffraction des rayons X. L'alliage est composé en majorité (>90%) de la phase Pr₃Au₄ de structure hexagonale (type Pu₃Pd₄). La poudre, obtenue après oxydation, a été caractérisée par diffraction des rayons X (figure 43a).

La figure 43a montre que la poudre obtenue se compose de particules d'or d'une taille voisine de 8 nm, et de particules d'oxyde de praséodyme (mélange PrO₂ et Pr₂O₃), dont les domaines de cohérence (estimation par la loi de Scherrer) sont de taille nanométrique voisine de 40 nm.

Le cliché de la figure 43b révèle que les particules d'or et d'oxyde de praséodyme forment des agglomérats dont la taille varie d'une dizaine de microns à une centaine de microns. Ces agglomérats sont très poreux et sont constitués d'un mélange de nanoparticules d'or et de nanoparticules d'oxyde de praséodyme.

Le pourcentage massique en or dans le matériau est de 58,2%.

### Activité catalytique

L'activité catalytique de la poudre est obtenue en mesurant le taux de conversion du CO en fonction de la température.

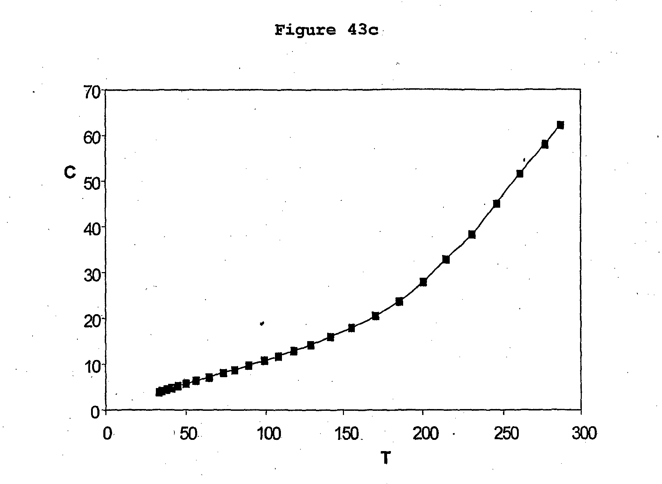

La figure 43c montre les résultats obtenus en conversion de CO en fonction de la température pour 10,7 mg de Au/(PrO₂-Pr₂O₃) soit 6,2 mg d'or. Les conditions expérimentales sont les suivantes : 2%CO, 2%O₂ dans He, débit 50ml/min et pression atmosphérique. Il faut noter que l'activité catalytique dépend de la taille des particules (métal noble et/ou oxyde) mais également du type de support. Dans cet exemple, l'activité catalytique du matériau obtenu lors de l'oxydation de CO augmente avec la température pour atteindre des valeurs comparables à celles observées pour des catalyseurs à base d'or préparés par des méthodes chimiques conventionnelles pour une même charge d'or.

### Exemple 22

### Matériau composite 2 du type Au/PrOₓ

### Préparation

L'alliage Pr₃Au₄ a été synthétisé à partir des éléments Au et Pr de pureté voisine de 99%. La synthèse est réalisée sous atmosphère inerte dans un creuset refroidi à l'eau pour éviter la contamination de l'alliage. L'alliage a ensuite été broyé grossièrement, pour obtenir une taille de grains variant de quelques dizaines à quelques centaines de microns, puis oxydé par exposition à l'air avec 60% d'humidité relative, à une température de 50°C.

### Caractérisation

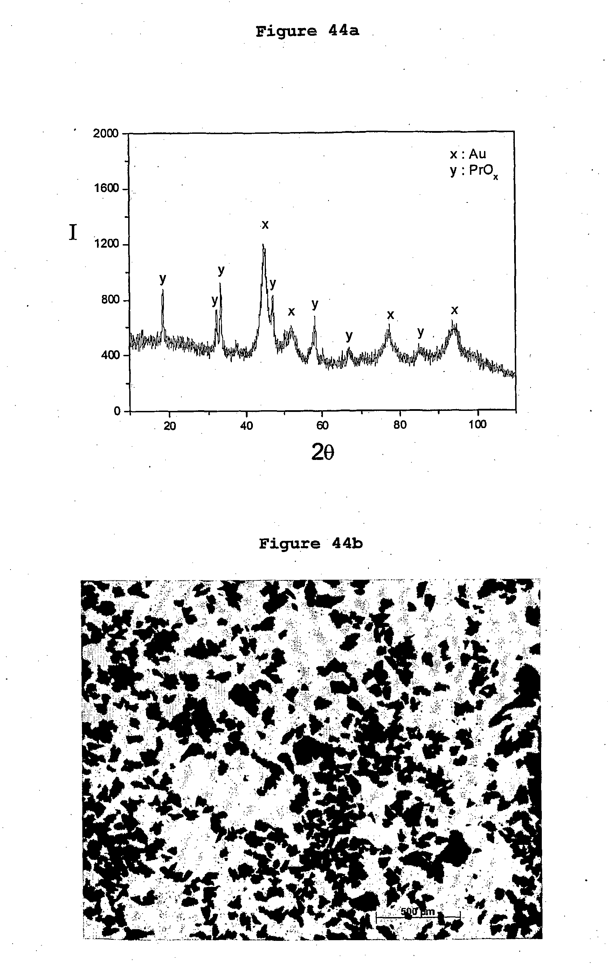

La caractérisation de l'alliage métallique précurseur (Pr₃Au₄) a été réalisée par diffraction des rayons X. L'alliage se compose uniquement de la phase Pr₃Au₄ de structure hexagonale (type Pu₃Pd₄). La poudre, obtenue après oxydation, a été caractérisée par diffraction des rayons X (figure 44a).

La figure 44a montre que la poudre obtenue se compose de particules d'or d'une taille voisine de 8 nm, et de particules d'oxydes de praséodyme (mélange PrO₂, majoritaire, et Pr₂O₃), dont la taille des domaines de cohérence (estimation par la loi de Scherrer) est voisine de 40 nm.

Le cliché de la figure 44b révèle que les particules d'or et d'oxyde de praséodyme forment des agglomérats de taille variant d'une dizaine de microns à une centaine de microns. Ces agglomérats sont très poreux et sont constitués d'un mélange de nanoparticules d'or et de nanoparticules de PrOₓ.

Le pourcentage massique en or dans le matériau est de 60,3%.

### Exemple 23

### Matériau composite Au/Sm₂O₃

### Préparation

L'alliage Sm₃Au₄ a été synthétisé à partir des éléments Au et Sm de pureté voisine de 99%. La synthèse est réalisée sous atmosphère inerte par fusion au four à arc dans un creuset refroidi à l'eau pour éviter la contamination de l'alliage. L'alliage a ensuite été broyé grossièrement, pour obtenir une taille de grains variant de quelques dizaines à quelques centaines de microns, puis oxydé par exposition à l'air avec 60% d'humidité relative, à une température de 50°C.

### Caractérisation

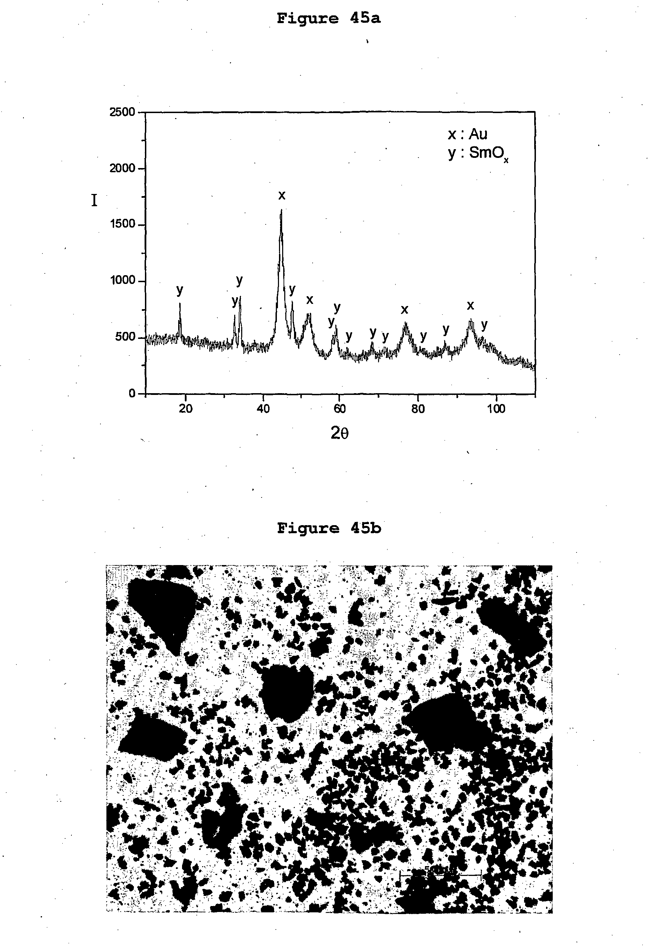

La caractérisation de l'alliage métallique précurseur (Sm₃Au₄) a été réalisée par diffraction des rayons X. L'alliage est composé uniquement de la phase Sm₃Au₄ de structure hexagonale (type Pu₃Pd₄). La poudre, obtenue après oxydation, a été caractérisée par diffraction des rayons X (figure 45a).

La figure 45a montre que la poudre obtenue se compose de particules d'or dont la taille des domaines de cohérence (estimation par la loi de Scherrer) varie de 5 à 12 nm environ, suivant les différentes orientations cristallines, et de particules de Sm₂O₃ dont la taille des domaines de cohérence est inférieure à 50 nm.

Le cliché de la figure 45b révèle que les particules d'or et d'oxyde de samarium forment des agglomérats de taille variant d'une dizaine de microns à une centaine de microns. Ces agglomérats sont très poreux et sont constitués d'un mélange de nanoparticules d'or et de nanoparticules de Sm₂O₃.

Le pourcentage massique en or dans le matériau est de 60,1%.

### Exemple 24

### Matériau composite Pt/PrOₓ

### Préparation

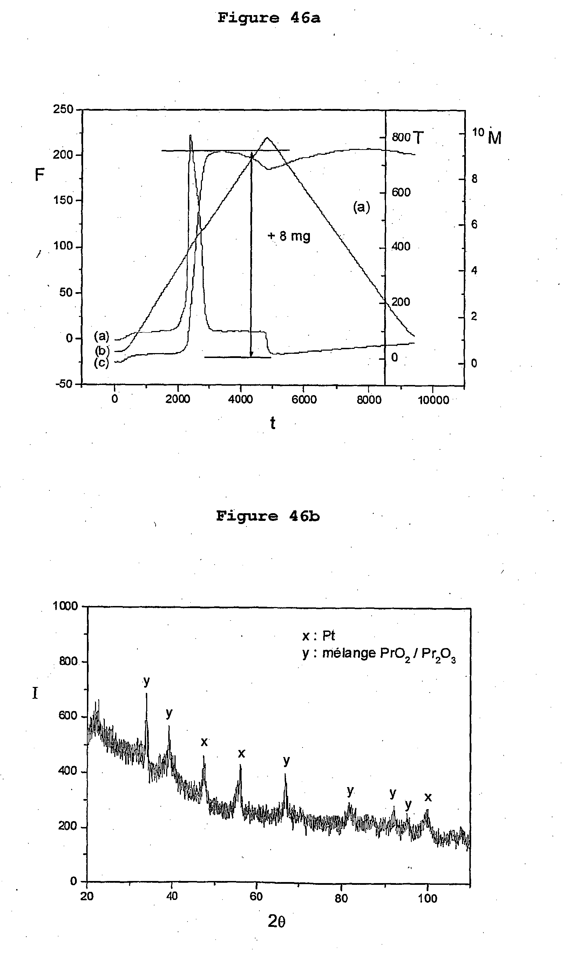

L'alliage Pr₃Pt₄ a été synthétisé à partir des éléments Pt et Pr de pureté voisine de 99%. La synthèse est réalisée sous atmosphère inerte dans un creuset refroidi à l'eau pour éviter la contamination de l'alliage. L'alliage a ensuite été broyé grossièrement, pour obtenir une taille de grains variant de quelques dizaines à quelques centaines de microns, puis porté à 800°C depuis l'ambiante à la vitesse de 10°C/min à l'air, et refroidi jusqu'à l'ambiante à 30°C/min (figure 46a).

### Caractérisation

La caractérisation de l'alliage métallique précurseur (Pr₃Pt₄) a été réalisée par diffraction des rayons X. Les pics- de la phase majoritaire (>90%) ont été indexés sur la structure hexagonale (type Pu₃Pd₄).

L'analyse thermogravimétrique montre que l'oxydation de l'alliage métallique s'accélère vers 300°C et atteint son maximum à environ 480°C (figure 46a).

La poudre, obtenue après oxydation menée par thermogravimétrie, a été caractérisée par diffraction des rayons X (figure 46b). La figure 46b montre que la poudre obtenue se compose de particules de platine d'une taille voisine de 16 nm, et de particules d'oxydes de praséodyme (mélange : PrO₂ et Pr₂O₃).

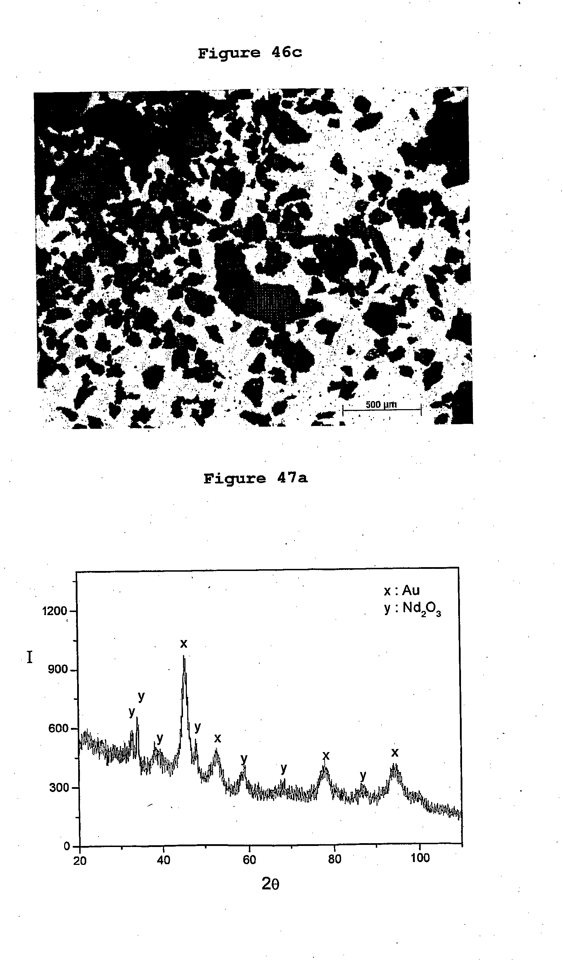

Le cliché de microscopie optique (figure 46c) révèle que les particules de platine et d'oxyde de praséodyme forment des agglomérats de taille très dispersée, du micron à plusieurs centaines de microns. Ces agglomérats sont très poreux et sont constitués d'un mélange de nanoparticules de platine et de nanoparticules d'oxyde de praséodyme.

Le pourcentage massique en platine dans le matériau est de 61,2%.

### Exemple 25

### Matériau composite Au/Nd₂O₃

### Préparation

L'alliage Nd₃Au₄ a été synthétisé à partir des éléments Au et Nd de pureté voisine de 99%. La synthèse est réalisée sous atmosphère inerte dans un creuset refroidi à l'eau pour éviter la contamination de l'alliage. L'alliage a ensuite été broyé grossièrement, pour obtenir une taille de grains variant de quelques dizaines à quelques centaines de microns, puis oxydé à l'air à 50°C.

### Caractérisation

La poudre, obtenue après oxydation menée par thermogravimétrie, a été caractérisée par diffraction des rayons X (figure 47a). La figure 47a montre que la poudre obtenue se compose de particules d'or d'une taille voisine de 8 nm, et de particules de Nd₂O₃.

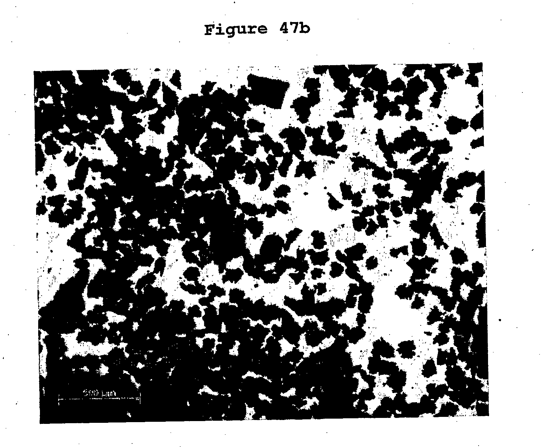

Le cliché de microscopie optique (figure 47b) révèle que les particules d'or et d'oxyde.de néodyme forment des agglomérats de taille très dispersée, du micron à plusieurs centaines de microns. Ces agglomérats sont très poreux et sont constitués d'un mélange de nanoparticules d'or et de nanoparticules d'oxyde de néodyme.

Le pourcentage massique en or dans le matériau est de 61%.

## Revendications

1. Procédé de préparation d'un matériau comprenant un mélange de nanoparticules de métal noble et de nanoparticules d'oxydes de terres rares, **caractérisé en ce qu'**il comprend les étapes successives suivantes :
a) préparation d'un alliage métallique comprenant au moins un métal noble choisi dans le groupe comprenant les éléments Ru, Rh, Ir, Ag, Au, Pd, Pt, Ni, Cu, au moins une terre rare choisie dans le groupe comprenant les éléments La, Ce, Pr, Nd, Pm, Sm, Eu, Gd, Tb, Dy, Ho, Er, Tm, Yb, Lu, Y, Sc, et au moins un métal de transition choisi dans le groupe comprenant les éléments de la colonne IVB de la classification périodique des éléments : Ti, Zr, Hf, de la colonne VB : V, Nb, Ta, de la colonne VIB : Cr, Mo, W, de la colonne VIIB : Mn, Tc, Re, de la colonne IIB : Zn, Cd, Hg, et les éléments Fe, Co, Os, ledit alliage contenant une phase cristallisée dont la composition en terre rare est supérieure à 10% atomique et dont la composition en métal noble est comprise entre 25 et 75% atomique ;
b) oxydation de l'alliage métallique obtenu au cours de l'étape a), sous atmosphère oxydante.

2. Procédé selon la revendication 1, **caractérisé en ce que**, dans l'alliage préparé lors de l'étape a), la terre rare est partiellement remplacée par un élément de la famille des actinides choisi parmi Ac, Th, Pa.

3. Procédé selon la revendication 1 ou 2, **caractérisé en ce que** l'étape a) est réalisée par l'une des techniques suivantes :
- fusion des éléments purs ;
- métallurgie des poudres ou des couches minces chauffées à une température supérieure ou égale à 200°C ; ou
- synthèse mécanique à partir des éléments purs ou d'alliages.

4. Procédé selon la revendication 1, **caractérisé en ce que**, lorsque l'étape a) est réalisée à une température supérieure à 50°C, elle est effectuée sous atmosphère inerte ou réductrice.

5. Procédé selon l'une quelconque des revendications précédentes, **caractérisé en ce que** l'étape b) est réalisée à une température inférieure à 800°C.

6. Procédé selon l'une quelconque des revendications précédentes, **caractérisé en ce que** l'étape b) s'effectue à l'air.

7. Procédé selon l'une quelconque des revendications précédentes, **caractérisé en ce qu'**il comprend, entre les étapes a) et b), une étape de traitement thermique de l'alliage métallique à une température comprise entre 200°C et 1000°C, sous atmosphère inerte ou réductrice.

8. Procédé selon l'une quelconque des revendications précédentes, **caractérisé en ce qu'**il comprend, entre les étapes a) et b), une étape de broyage de l'alliage métallique.

9. Procédé selon l'une quelconque des revendications précédentes, **caractérisé en ce qu'**il comprend, après l'étape b), une étape de broyage mécanique ou ultrasonique de la poudre obtenue.

10. Procédé selon l'une quelconque des revendications précédentes, **caractérisé en ce qu'**il comprend, pendant ou après l'étape b), une étape de traitement thermique de coalescence destinée à ajuster la taille des particules obtenues.

11. Matériau composite comprenant un mélange de nanoparticules d'au moins un métal noble choisi dans le groupe comprenant les éléments Ru, Rh, Ir, Ag, Au, Pd, Pt, Ni, Cu, de nanoparticules d'au moins un oxyde de terre rare, ladite terre rare étant choisie dans le groupe comprenant La, Ce, Pr, Nd, Pm, Sm, Eu, Gd, Tb, Dy, Ho, Er, Tm, Yb, Lu, Y, Sc, et de nanoparticules d'au moins un oxyde de métal de transition, ledit métal de transition étant choisi dans le groupe comprenant les éléments de la colonne IVB de la classification périodique des éléments : Ti, Zr, Hf, de la colonne VB : V, Nb, Ta, de la colonne VIB : Cr, Mo, W, de la colonne VIIB : Mn, Tc, Re, de la colonne IIB : Zn, Cd, Hg, et Fe, Co, Os, lesdites nanoparticules présentant une granulométrie inférieure à 20 nm, **caractérisé en ce que** le pourcentage massique de métal noble dans ledit matériau est supérieur ou égal à 20%.

12. Matériau selon la revendication 11, **caractérisé en ce qu'**il comprend en outre des nanoparticules d'au moins un oxyde d'un élément de la famille des actinides, ledit élément étant choisi parmi Ac, Th, Pa.

13. Utilisation d'un matériau selon l'une quelconque des revendications 11 à 12, pour la catalyse, pour la fabrication d'instruments d'optique non linéaire ou pour l'élaboration de poudres d'oxydes nanométriques entrant dans la fabrication de céramiques frittées.

## Claims

1. Process for producing a material comprising a mixture of noble metal nanoparticles and rare-earth oxide nanoparticles, **characterized in that** it comprises the following successive steps:
a) production of a metal alloy comprising at least one noble metal chosen from the group comprising the elements Ru, Rh, Ir, Ag, Au, Pd, Pt, Ni, Cu, at least one rare earth chosen from the group comprising the elements La, Ce, Pr, Nd, Pm, Sm, Eu, Gd, Tb, Dy, Ho, Er, Tm, Yb, Lu, Y, Sc, and at least one transition metal chosen from the group comprising the elements of column IVB of the Periodic Table of the Elements: Ti, Zr, Hf, from column VB: V, Nb Ta, from column VIB: Cr, Mo, W, from column VIIB: Mn, Tc, Re, from column IIB: Zn, Cd, Hg, and the elements Fe, Co and Os, said alloy containing a crystalline phase the rare earth content of which is greater than 10 at% and the noble metal content of which is between 25 and 75 at%;
b) oxidation, in an oxidizing atmosphere, of the metal alloy obtained during step a).

2. Process according to Claim 1, **characterized in that**, in the alloy produced during step a), the rare earth is partially replaced with an element of the actinide family, chosen from Ac, Th, Pa.

3. Process according to Claim 1 or 2, **characterized in that** step a) is carried out by one of the following techniques:
- melting the pure elements;
- powder metallurgy or by thin films heated to a temperature of 200°C or higher; or
- mechanical synthesis from the pure elements or from alloys.

4. Process according to Claim 1, **characterized in that**, when step a) is carried out at a temperature above 50°C, it is performed in an inert or reducing atmosphere.

5. Process according to any one of the preceding claims, **characterized in that** step b) is carried out at a temperature below 800°C.

6. Process according to any one of the preceding claims, **characterized in that** step b) is performed in air.

7. Process according to any one of the preceding claims, **characterized in that** it includes, between steps a) and b), a heat treatment step for heating the metal alloy to a temperature between 200°C and 1000°C in an inert or reducing atmosphere.

8. Process according to any one of the preceding claims, **characterized in that** it includes, between steps a) and b) a step of grinding the metal alloy.

9. Process according to any one of the preceding claims, **characterized in that** it includes, after step b), a step of mechanically or ultrasonically grinding the powder obtained.

10. Process according to any one of the preceding claims, **characterized in that** it includes, during or after step b), a coalescence heat treatment step intended to adjust the size of the particles obtained.

11. Composite comprising a mixture of nanoparticles of at least one noble metal chosen from the group comprising the elements Ru, Rh, Ir, Ag, Au, Pd, Pt, Ni, Cu, nanoparticles of at least one rare-earth oxide, said rare earth being chosen from the group comprising La, Ce, Pr, Nd, Pm, Sm, Eu, Gd, Tb, Dy, Ho, Er, Tm, Yb, Lu, Y, Sc, and nanoparticles of at least one transition metal oxide, said transition metal being chosen from the group comprising the elements of column IVB of the Periodic Table of the Elements: Ti, Zr, Hf, from column VB: V, Nb, Ta, from column VIB: Cr, Mo, W, from column VIIB: Mn, Tc, Re, from column IIB: Zn, Cd, Hg, and Fe, Co and Os, said nanoparticles having a particle size of less than 20 nm, **characterized in that** the percentage content by weight of noble metal in said material is equal to or greater than 20%.

12. Composite according to Claim 11, **characterized in that** it further includes nanoparticles of at least one oxide of an element from the actinide family, said element being chosen from Ac, Th, Pa.

13. Use of a composite according to any one of Claims 11 to 12 for catalysis, for the manufacture of nonlinear optical instruments or for the production of nanoscale oxide powders involved in the manufacture of sintered ceramics.

## Patentansprüche

1. Herstellungsverfahren eines Materials, das eine Mischung von Edelmetall-Nanopartikeln und von Seltenerdmetalloxid-Nanopartikeln umfasst, **dadurch gekennzeichnet, dass** es die folgenden aufeinanderfolgenden Schritte umfasst:
a) Herstellung einer Metalllegierung, die mindestens ein Edelmetall, das aus der Gruppe ausgewählt ist, die die Elemente Ru, Rh, Ir, Ag, Au, Pd, Pt, Ni, Cu umfasst, mindestens eine Seltene Erde, die aus der Gruppe ausgewählt ist, die die Elemente La, Ce, Pr, Nd, Pm, Sm, Eu, Gd, Tb, Dy, Ho, Er, Tm, Yb, Lu, Y, Sc umfasst und mindestens ein Übergangsmetall, das aus der Gruppe ausgewählt ist, die die Elemente der Spalte lVB des Periodensystems der Elemente Ti, Zr, Hf, der Spalte Vb V, Nb, Ta, der Spalte VIb Cr, Mo, W, der Spalte VIIb Mn, Tc, Re, der Spalte IIb Zn, Cd, Hg und die Elemente Fe, Co, Os umfasst, wobei die Legierung eine kristallisierte Phase enthält, deren Seltenerdzusammensetzung höher als 10 Atom-Prozent ist und deren Edelmetallzusammensetzung zwischen 25 und 75 Atom-Prozent inklusive ist,
b) Oxydation der in Schritt a) erhaltenen Metalllegierung in Oxidationsatmosphäre.

2. Verfahren nach Anspruch 1, **dadurch gekennzeichnet, dass** in der im Schritt a) hergestellten Legierung die Seltene Erde teilweise durch ein Element aus der Familie der Actinide ersetzt ist, das aus Ac, Th, Pa ausgewählt ist.

3. Verfahren nach Anspruch 1 oder 2, **dadurch gekennzeichnet, dass** Schritt a) mittels einer der folgenden Techniken durchgeführt wird:
- Fusion der reinen Elemente,
- Pulver- oder Metallurgie dünner Schichten, die auf eine Temperatur über oder gleich 200 °C erhitzt werden, oder
- mechanische Synthese aus reinen Elementen oder Legierungen.

4. Verfahren nach Anspruch 1, **dadurch gekennzeichnet, dass**, wenn Schritt a) bei einer Temperatur über 50 °C durchgeführt wird, er in unter Schutzgas- oder reduktiver Atmosphäre durchgeführt wird.

5. Verfahren nach einem der vorangehenden Ansprüche, **dadurch gekennzeichnet, dass** Schritt b) bei einer Temperatur unter 800 °C durchgeführt wird.

6. Verfahren nach einem der vorangehenden Ansprüche, **dadurch gekennzeichnet, dass** Schritt b) in der Luft durchgeführt wird.

7. Verfahren nach einem der vorangehenden Ansprüche, **dadurch gekennzeichnet, dass** es zwischen den Schritten a) und b) einen Schritt der thermischen Behandlung der Metalllegierung bei einer Temperatur zwischen 200 °C und 1000 °C inklusive unter Schutzgas- oder reduktiver Atmosphäre umfasst.

8. Verfahren nach einem der vorangehenden Ansprüche, **dadurch gekennzeichnet, dass** es zwischen den Schritten a) und b) einen Schritt der Zerkleinerung der Metalllegierung umfasst.

9. Verfahren nach einem der vorangehenden Ansprüche, **dadurch gekennzeichnet, dass** es nach dem Schritt b) einen Schritt der mechanischen oder Ultraschall-Zerkleinerung des erhaltenen Pulvers umfasst.

10. Verfahren nach einem der vorangehenden Ansprüche, **dadurch gekennzeichnet, dass** es während oder nach Schritt b) einen Schritt der thermischen Koaleszenzbehandlung umfasst, der dazu bestimmt ist, die Größe der erhaltenen Partikel anzupassen.

11. Verbundmaterial, das eine Mischung von Nanopartikeln mindestens eines Edelmetalls, das aus der Gruppe ausgewählt ist, die die Elemente Ru, Rh, Ir, Ag, Au, Pd, Pt, Ni, Cu umfasst, von Nanopartikeln mindestens eines Seltenerdmetalloxids, wobei die Seltene Erde aus der Gruppe ausgewählt ist, die La, Ce, Pr, Nd, Pm, Sm, Eu, Gd, Tb, Dy, Ho, Er, Tm, Yb, Lu, Y, Sc umfasst und von Nanopartikeln mindestens eines Übergangsmetalls, wobei das Übergangsmetall aus der Gruppe ausgewählt ist, die die Elemente der Spalte lVb des Periodensystems der Elemente Ti, Zr, Hf, der Spalte Vb V, Nb, Ta, der Spalte VIb Cr, Mo, W, der Spalte VIIb Mn, Tc, Re, der Spalte IIb Zn, Cd, Hg und die Elemente Fe, Co, Os umfasst, wobei die Nanopartikel eine Korngröße unter 20 nm aufweisen, **dadurch gekennzeichnet, dass** der Edelmetall-Massenanteil in dem Material höher oder gleich 20 % ist.

12. Material nach Anspruch 11, **dadurch gekennzeichnet, dass** es ferner Nanopartikel mindestens eines Oxids eines Elements aus der Familie der Actinide umfasst, wobei das Element aus Ac, Th, Pa ausgewählt ist.

13. Verwendung eines Materials nach einem der Ansprüche 11 bis 12 für die Katalyse, für die Herstellung von Instrumenten nichtlinearer Optik oder für die Erzeugung von nanometrischen Oxidpulvern, die in die Herstellung von gesinterten Keramiken einfließen.
